(19) Europäisches Patentamt
European Patent Office
Office européen des brevets

(11) **EP 4 694 114 A1**

(12) **EUROPEAN PATENT APPLICATION**
published in accordance with Art. 153(4) EPC

(43) Date of publication:
**11.02.2026 Bulletin 2026/07**

(21) Application number: **23932157.3**

(22) Date of filing: **20.12.2023**

(51) International Patent Classification (IPC):
*H04N 19/103* (2014.01)       *H04N 19/18* (2014.01)
*H04N 19/50* (2014.01)       *H04N 19/70* (2014.01)

(52) Cooperative Patent Classification (CPC):
H04N 19/103; H04N 19/18; H04N 19/50;
H04N 19/70

(86) International application number:
**PCT/JP2023/045668**

(87) International publication number:
**WO 2024/209748 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.04.2023 JP 2023062712**

(71) Applicant: **Sharp Kabushiki Kaisha
Sakai City, Osaka 590-8522 (JP)**

(72) Inventors:
• **YASUGI, Yukinobu
  Sakai City, Osaka 590-8522 (JP)**
• **IKAI, Tomohiro
  Sakai City, Osaka 590-8522 (JP)**
• **AONO, Tomoko
  Sakai City, Osaka 590-8522 (JP)**

(74) Representative: **Müller Hoffmann & Partner
Patentanwälte mbB
St.-Martin-Strasse 64
81541 München (DE)**

(54) **VIDEO DECODING DEVICE AND VIDEO CODING DEVICE**

(57)    Video coding and decoding apparatuses that can enhance coding efficiency are provided. A video decoding apparatus includes a parameter decoder configured to decode a transform coefficient and a sign prediction parameter from coded data, and a sign prediction unit configured to predict a sign of the transform coefficient. For a candidate of a combination of signs of transform coefficients without sign information, the sign prediction unit derives a cost with reference to a boundary pixel with a neighboring block, predicts the sign based on the cost, and modifies the predicted sign of the transform coefficient using the sign prediction parameter obtained by decoding by the parameter decoder.

FIG. 10

**Description**

Technical Field

An embodiment of the present invention relates to a video decoding apparatus and a video coding apparatus.

Background Art

A video coding apparatus which generates coded data by coding a video, and a video decoding apparatus which generates decoded images by decoding coded data are used for efficient transmission or recording of videos.

Specific video coding schemes include, for example, H.264/AVC, High-Efficiency Video Coding (HEVC), Versatile Video Coding (VVC) schemes, and the like.

In such a video coding scheme, images (pictures) constituting a video are managed in a hierarchical structure including slices obtained by splitting an image, Coding Tree Units (CTUs) obtained by splitting a slice, Coding Units (CUs) obtained by splitting a coding tree unit, and Transform Units (TUs) obtained by splitting a coding unit, and are coded/decoded for each CU.

In such a video coding scheme, usually, a prediction image is generated based on a locally decoded image that is obtained by coding/decoding an input image, and a prediction error (which may be referred to also as a "difference image" or a "residual image") obtained by subtracting the prediction image from the input image (source image) is coded. Generation methods of prediction images include inter picture prediction (inter prediction) and intra picture prediction (intra prediction).

In HEVC/H.265 and VVC/H.266, a technique of coding a sign for each transform coefficient is disclosed. In NPL 1, a technique referred to as Sign Prediction is disclosed, in which signs of transform coefficients are predicted and a prediction sign error is coded. In NPL 2, techniques for performing transform coefficient sort for selecting a transform coefficient as a target to be subjected to sign prediction, block size restriction for performing sign prediction, and sign prediction in non-separable transform are disclosed.

Citation List

Non Patent Literature

NPL 1: "Residual Coefficient Sign Prediction", JVET-D0031, Joint Video Exploration Team (JVET) of ITU-T SG 16 WP 3 and ISO/IEC JTC 1/SC 29/WG 11, 4th Meeting, Chengdu, CN, Oct, 2016
NPL 2: "EE2-4.3 related: More combined test results for sign prediction", JVET-Y0141, Joint Video Experts Team (JVET) of ITU-T SG 16 WP 3 and ISO/IEC JTC 1/SC 29, 25th Meeting, by teleconference, January 2022

Summary of Invention

Technical Problem

In the methods described in NPL 1 and NPL 2, as the number of signs to be predicted increases, combinations thereof increase exponentially, and thus there is a problem in that the amount of calculation increases. Due to the sign prediction being added to quantization and transform processing, there is a problem in that the number of cycles required until deriving residuals increases.

Solution to Problem

In order to solve the problems described above, a video decoding apparatus according to an aspect of the present invention includes a parameter decoder configured to decode a transform coefficient and a sign prediction parameter from coded data, and a sign prediction unit configured to predict a sign of the transform coefficient. For a candidate of a combination of signs of transform coefficients without sign information, the sign prediction unit derives a cost with reference to a boundary pixel with a neighboring block, predicts the sign based on the cost, and modifies the predicted sign of the transform coefficient using the sign prediction parameter obtained by decoding by the parameter decoder.

The sign prediction unit changes an operation of sign prediction depending on a parameter used for decoding of a transform coefficient of a target block.

The parameter used for decoding the transform coefficient is a quantization parameter.

The parameter used for decoding the transform coefficient is a last position of the transform coefficient.

The parameter used for decoding the transform coefficient is a syntax element indicating whether the transform coefficient is greater than a prescribed value.

The sign prediction unit determines whether to perform sign prediction depending on the parameter used for decoding of the transform coefficient of the target block.

The sign prediction unit changes the number of signs to be predicted depending on the parameter used for decoding of the transform coefficient of the target block.

Advantageous Effects of Invention

According to an aspect of the present invention, the amount of calculation required for prediction of a sign of a transform coefficient can be reduced in video coding/decoding processing. In the video coding/decoding processing, the number of cycles required until deriving residuals can be reduced.

Brief Description of Drawings

FIG. 1 is a schematic diagram illustrating a configuration of an image transmission system according to the present embodiment.

FIG. 2 is a diagram illustrating a hierarchical structure of data of a coding stream.

FIG. 3 is a schematic diagram illustrating a configuration of a video decoding apparatus.

FIG. 4 is a flowchart illustrating general operation of the video decoding apparatus.

FIG. 5 is a functional block diagram illustrating a configuration example of an inverse quantization and inverse transform processing unit.

FIG. 6 is an example of a syntax table related to sign prediction in an SPS and a slice header.

FIG. 7 is a part of a syntax table related to a TU decoder.

FIG. 8 is a part of the syntax table related to the TU decoder.

FIG. 9 is an example of another syntax table related to the sign prediction.

FIG. 10 is a flowchart illustrating a flow of an example of processing in the sign prediction.

FIG. 11 is a diagram illustrating the sign prediction. (a) is a diagram illustrating an example of coefficients as a prediction target, and (b) to (d) are diagrams illustrating templates different from each other.

FIG. 12 is a diagram illustrating boundary part residuals and pixels around the boundary part residuals in the sign prediction.

FIG. 13 is an example of a syntax table in an embodiment for exclusively performing the sign prediction and non-separable transform.

FIG. 14 is a block diagram illustrating a configuration of a video coding apparatus.

Description of Embodiments

First Embodiment

Embodiments of the present invention will be described below with reference to the drawings.

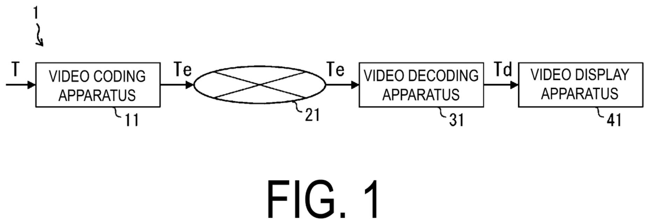

FIG. 1 is a schematic diagram illustrating a configuration of an image transmission system 1 according to the present embodiment.

The image transmission system 1 is a system in which a coding stream obtained by coding a target image is transmitted, the transmitted coding stream is decoded, and thus an image is displayed. The image transmission system 1 includes a video coding apparatus (image coding apparatus) 11, a network 21, a video decoding apparatus (image decoding apparatus) 31, and a video display apparatus (image display apparatus) 41.

An image T is input to the video coding apparatus 11.

The network 21 transmits a coding stream Te generated by the video coding apparatus 11 to the video decoding apparatus 31. The network 21 is the Internet, a Wide Area Network (WAN), a Local Area Network (LAN), or a combination thereof. The network 21 is not limited to a bidirectional communication network and may be a unidirectional communication network that transmits broadcast waves for terrestrial digital broadcasting, satellite broadcasting, or the like. The network 21 may be substituted by a storage medium in which the coding stream Te is recorded, such as a Digital Versatile Disc (DVD) (trade name) or a Blue-ray Disc (BD) (trade name).

The video decoding apparatus 31 decodes each of the coding streams Te transmitted from the network 21 and generates one or multiple decoded images Td.

The video display apparatus 41 displays all or part of one or multiple decoded images Td generated by the video decoding apparatus 31. For example, the video display apparatus 41 includes a display device such as a liquid crystal display and an organic Electroluminescence (EL) display. Examples of display types include stationary, mobile, and HMD. In addition, in a case that the video decoding apparatus 31 has a high processing capability, an image having high image quality is displayed, and in a case that the video decoding apparatus has a lower processing capability, an image which does not require high processing capability and display capability is displayed.

Operators

Operators used in the present specification will be described below.

">>" is a right bit shift, "<<" is a left bit shift, "&" is a bitwise AND, "|" is a bitwise OR, "|=" is an OR assignment operator, and "||" indicates a logical sum.

x ? y:z is a ternary operator that takes y if x is true (not 0) and takes z if x is false (0).

Clip3(a, b, c) is a function to clip c in a value from a to b, and a function to return a in a case that c is smaller than a (c < a), return b in a case that c is greater than b (c > b), and return c in the other cases (provided that a is smaller than or equal to b (a <= b)).

abs(a) is a function that returns the absolute value of a.

Int(a) is a function that returns the integer value of a.

Floor (a) is a function that returns the maximum integer equal to or less than a.

Ceil(a) is a function that returns the minimum integer equal to or greater than a.

Sign(x) = (x>0) ?. 1 : (x==0) ? 0:-1

$$\text{Round}(x) = \text{Sign}(x) * \text{Floor}(\text{Abs}(x) + 0.5).$$

Log2(a) is a function that returns a logarithm to base 2.

min(a, b) is a function that returns the smaller value between a and b.

a/d represents division of a by d (round down decimal places).

Structure of Encoding Stream Te

Prior to the detailed description of the video coding apparatus 11 and the video decoding apparatus 31 according to the present embodiment, a data structure of the coding stream Te generated by the video coding apparatus 11 and decoded by the video decoding apparatus 31 will be described.

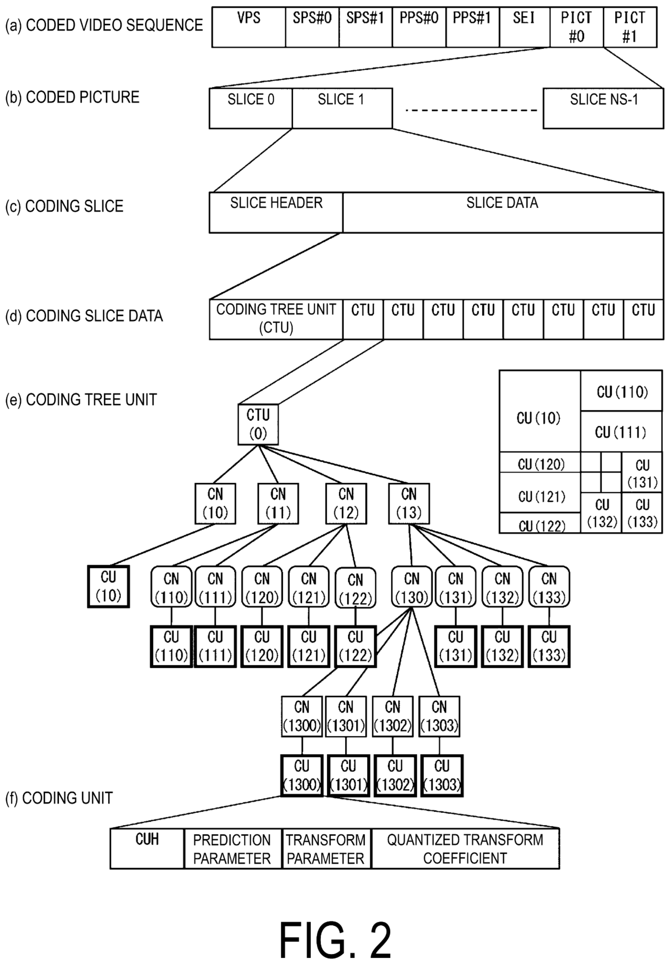

FIG. 2 is a diagram illustrating a hierarchical structure of data of the coding stream Te. The coding stream Te includes, as an example, a sequence and multiple pictures constituting the sequence. FIG. 2 illustrates a coded video sequence that predetermines a sequence SEQ, a coded picture that defines a picture PICT, a coding slice that defines a slice S, coding slice data that defines slice data, coding tree units included in coding slice data, and coding units included in each coding tree unit.

Coded Video Sequence

In the coded video sequence, a set of data referred to by the video decoding apparatus 31 to decode the sequence SEQ is defined. As illustrated in FIG. 2, the sequence SEQ includes a Video Parameter Set, Sequence Parameter Sets SPS, Picture Parameter Sets PPS, an Adaptation Parameter Set (APS), a picture PICT, and Supplemental Enhancement Information SEI.

The video parameter set VPS defines, in a video including multiple layers, a set of coding parameters common to multiple video images and a set of coding parameters relating to multiple layers and individual layers included in the video.

In the sequence parameter sets SPSs, a set of coding parameters referred to by the video decoding apparatus 31 to decode a target sequence is defined. For example, a width and a height of a picture are defined. Note that multiple SPSs may exist. In that case, any of the multiple SPSs is selected from the PPS.

In the picture parameter sets (PPS), a set of coding parameters that the video decoding apparatus 31 refers to in order to decode each picture in the target sequence is defined. For example, a PPS includes a reference value for a quantization step size used in picture decoding (pic_init_qp_minus26) and a flag indicating application of weighted prediction (weighted_pred_flag). Note that multiple PPSs may exist. In that case, any of the multiple PPSs is selected from each picture in a target sequence.

Coded Picture

In a coded picture, a set of data referred to by the image decoding apparatus 31 to decode the picture PICT is defined. The picture PICT includes slice 0 to slice NS-1 (NS is the total number of slices included in the picture PICT) as illustrated in FIG. 2.

Note that, in a case that it is not necessary to distinguish each of the slice 0 to the slice NS-1 below, numeric suffixes of reference signs may be omitted. In addition, the same applies to other data with suffixes included in the coding stream Te which will be described below.

Coding Slice

In each coding slice, a set of data referred to by the video decoding apparatus 31 to decode the slice S is defined. The slice includes a slice header and slice data as illustrated in FIG. 2.

The slice header includes a coding parameter group referred to by the video decoding apparatus 31 to determine a decoding method for a target slice. Slice type indication information (slice_type) indicating a slice type is one example of a coding parameter included in the slice header.

Examples of slice types that can be indicated by the slice type indication information include (1) an I slice for which only intra prediction is used for coding, (2) a P slice for which unidirectional prediction or intra prediction is used for coding, (3) a B slice for which unidirectional prediction, bidirectional prediction, or intra prediction is used for coding. Note that the inter prediction is not limited to uni-prediction and bi-prediction, and a prediction image may be generated by using a greater number of reference pictures. Hereinafter, in a case of a slice being referred to as a P or B slice, it indicates a slice including a block in which inter prediction can be used.

Note that the slice header may include a reference to the picture parameter set PPS (pic_parameter_set_id).

Coding Slice Data

In coding slice data, a set of data referred to by the image decoding apparatus 31 to decode the slice data is defined. The slice data includes CTUs as illustrated in FIG. 2(d). A CTU is a block of a fixed size (e.g., 128×128) that constitutes a slice.

Coding Tree Unit

In FIG. 2, a set of data referenced by the video decoding apparatus 31 to decode the CTU is defined. The CTU is split into coding units CUs, each of which is a basic unit of coding processing, by a recursive Quad Tree (QT) split, Binary Tree (BT) split, or Ternary Tree (TT) split. The BT split and the TT split are collectively referred to as Multi Tree (MT) split. A node of a tree structure obtained by recursive quad tree split is referred to as a Coding Node. An intermediate node of a quad tree, a binary tree, and a ternary tree is a coding node, and a CTU itself is also defined as the highest coding node. The lowest coding node is defined as the coding unit.

Coding Unit

In FIG. 2, a set of data referenced by the video decoding apparatus 31 to decode the coding unit is defined. Specifically, a CU includes a CU header CUH, a prediction parameter, a transform parameter, a quantized transform coefficient, and the like. In the CU header, a prediction mode and the like are defined.

The prediction processing may be performed for each CU or performed for each sub-CU, the sub-CU being obtained by further splitting the CU. In a case that a CU and a sub-CU have an equal size, the number of sub-CUs in the CU is one. In a case that a CU has a size greater than that of a sub-CU, the CU is split into sub-CUs. For example, in a case that a CU has a size of 8 x 8, and a sub-CU has a size of 4 x 4, the CU is split into four sub-CUs which include two horizontal splits and two vertical splits.

Types of prediction (prediction mode) include intra prediction (MODE_INTRA), inter prediction (MODE_INTER), and an intra block copy (MODE_IBC). Intra prediction refers to prediction in the same picture, and inter prediction refers to prediction processing performed between different pictures (for example, between pictures of different display times, and between pictures of different layer images).

Although transform and quantization processing is performed for each CU, a quantized transform coefficient may be entropy-coded for each subblock (subTU) such as 4 x 4.

Prediction Parameters

The prediction parameters include intra prediction and inter prediction parameters. The inter prediction parameters include, for example, predMode indicating a prediction mode. The intra prediction parameters include a luma prediction mode IntraPredModeY, a chroma prediction mode IntraPredModeC, and the like. Note that, in a case that the present specification mentions "a flag indicating whether XX is applied", the flag indicating a value other than 0 (for example, 1) means a case where XX is applied, and the flag indicating 0 means a case where XX is not applied, and 1 is treated as true and 0 is treated as false in a logical negation, a logical product, and the like (hereinafter, the same applies). However, other values can be used for true values and false values in real apparatuses and methods.

Configuration of Video Decoding Apparatus

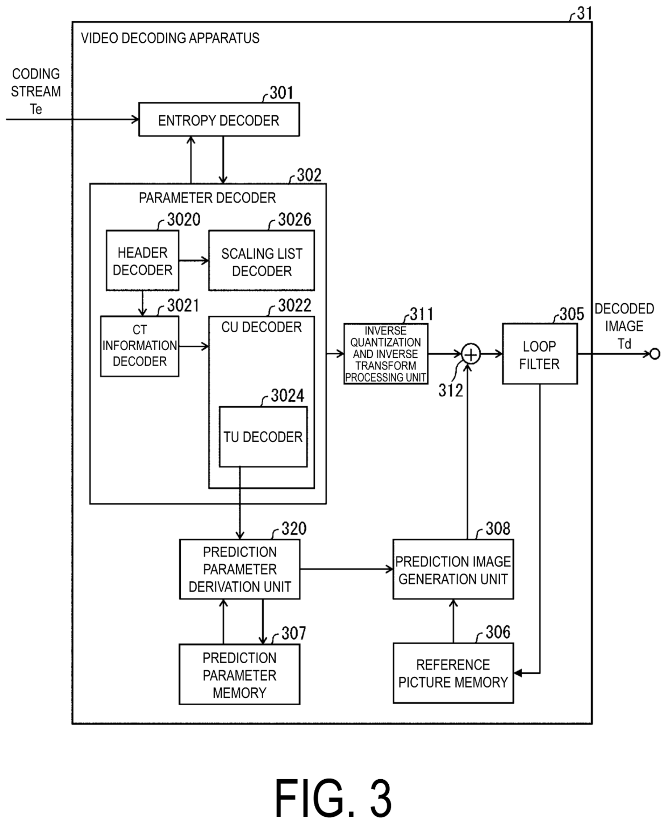

A configuration of the video decoding apparatus 31 (FIG. 3) according to the present embodiment will be described.

The video decoding apparatus 31 includes an entropy decoder 301, a parameter decoder (a prediction image decoding apparatus) 302, a loop filter 305, a reference picture memory 306, a prediction parameter memory 307, a prediction image generation unit (prediction image generation apparatus) 308, an inverse quantization and inverse transform processing unit 311, an addition unit 312, and a prediction parameter derivation unit 320. Note that a configuration in which the loop filter 305 is not included in the video decoding apparatus 31 may be used in accordance with the video coding apparatus 11 described below.

The parameter decoder 302 further includes a header decoder 3020, a CT information decoder 3021, and a CU decoder 3022 (prediction mode decoder), and the CU decoder 3022 further includes a TU decoder 3024. These may be collectively referred to as a decoding module. The header decoder 3020 decodes, from coded data, parameter set information such as a VPS, an SPS, a PPS, and an APS, and a slice header (slice information). The CT information decoder 3021 decodes a CTU and a CT from coded data. The CU decoder 3022 decodes a CU from coded data.

The CU decoder 3022 decodes, from the coded data, a parameter lfnst_idx indicating whether a non-separable transform is used and a non-separable transform matrix. Specifically, in a case that the width and the height of the CU are equal to or greater than 4 and the prediction mode is the intra prediction mode, the CU decoder 3022 decodes lfnst_idx. Note that lfnst_idx being 0 indicates none-application of the non-separable transform, lfnst_idx being 1 indicates one transform matrix of a set (pair) of non-separable transform matrices, and lfnst_idx being 2 indicates the other transform matrix of the pair. The CU decoder 3022 derives a parameter ApplyLfnstFlag indicating whether to perform the non-separable transform on the target block from lfnst_idx.

ApplyLfnstFlag = lfnst_idx

The CU decoder 3022 may derive ApplyLfnstFlag[cIdx] for each color component cIdx as follows.
In a case that treeType == SINGLE_TREE or DUAL_TREE_LUMA, the CU decoder 3022 performs the following processing.

ApplyLfnstFlag[0]= (lfnst_idx>0)? 1 : 0

Then, the CU decoder 3022 performs the following processing on cIdx = 1, 2.

ApplyLfnstFlag[cIdx]= (lfnst_idx>0 && treeType==DUAL_TREE_CHROMA) ? 1 : 0

lfnst_idx may be 0 or 1. lfnst_idx may be derived from a mode number of the intra prediction.
The CU decoder 3022 decodes a value mts_idx indicating a transform matrix of Multiple Transform Selection (MTS) from the coded data. Specifically, in a case that the width and the height of the CU are equal to or greater than 32 and lfnst_idx is 0, the CU decoder 3022 decodes mts_idx. In MTS, one transform matrix is selected out of multiple transform matrix candidates and is used.
In a case that a size of the transform unit (tbWidth and tbHeight) is equal to or smaller than a prescribed maximum size (tbWidth <= MaxTsSize && tbHeight <= MaxTsSize), the TU decoder 3024 decodes transform_skip_flag[x0][y0][cIdx].
In a case that the TU includes a prediction error (for example, in a case that tu_cbf_luma[x0][y0] is 1), the TU decoder 3024 decodes, from the coded data, the QP update information and the quantized transform coefficient. The QP update information is a difference value from a quantization parameter prediction value qPpred, which is a prediction value of a quantization parameter QP.
In addition, although an example in which CTU and CU are used as a unit of processing will be described below, the unit of processing is not limited to this example, and processing may be performed for each sub-CU. Alternatively, the CTU or the CU may be referred to as a block, the sub-CU may be referred to as a subblock, and processing may be performed on a per block or subblock basis.

The entropy decoder 301 performs entropy decoding on the coding stream Te input from the outside and decodes individual codes (syntax elements). The entropy coding includes a method in which variable-length coding of syntax elements is performed by using a context (probability model) adaptively selected depending on a type of syntax element and a surrounding condition, and a method in which variable-length coding of syntax elements is performed by using a predetermined table or formula.

The entropy decoder 301 outputs the decoded codes to the parameter decoder 302. Which code is to be decoded is controlled based on an indication of the parameter decoder 302.

Basic Flow

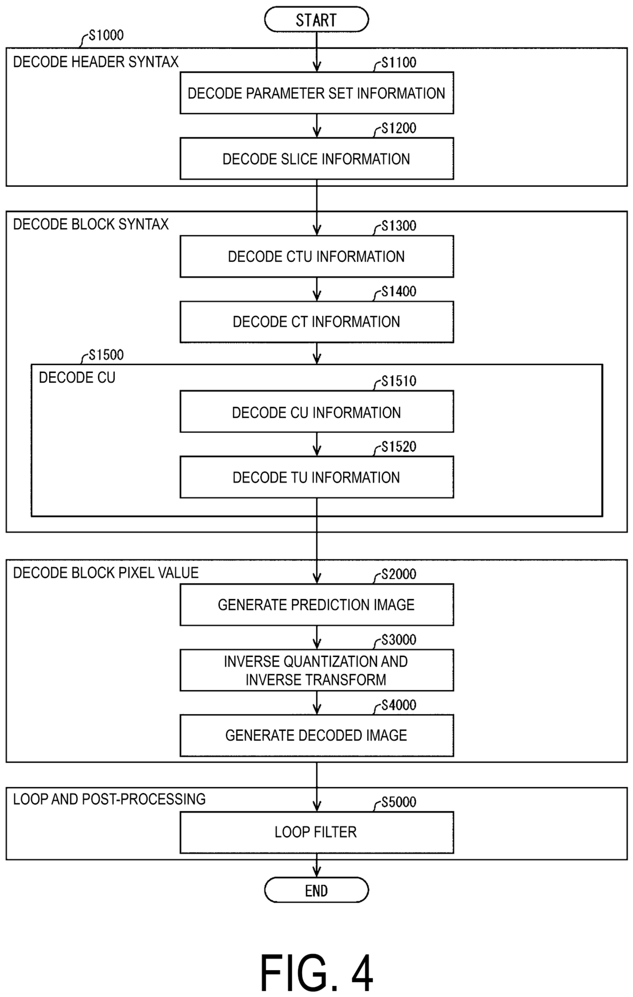

FIG. 4 is a flowchart for describing a schematic operation performed by the video decoding apparatus 31.

(S1100: Decoding of parameter set information) The header decoder 3020 decodes parameter set information such as a VPS, an SPS, and a PPS from coded data.

(S1200: Decoding of slice information) The header decoder 3020 decodes a slice header (slice information) from the coded data.

Afterwards, the video decoding apparatus 31 repeats the processing from S1300 to S5000 for each CTU included in the target picture, and thereby derives a decoded image of each CTU.

(S1300: Decoding of CTU information) The CT information decoder 3021 decodes the CTU from the coded data.

(S1400: Decoding of CT information) The CT information decoder 3021 decodes the CT from the coded data.

(S1500: Decoding of CU) The CU decoder 3022 decodes the CU from the coded data by performing S1510 and S1520.

(S1510: Decoding of CU information) The CU decoder 3022 decodes CU information, prediction information, a TU split flag, a CU residual flag, and the like from the coded data.

(S1520: Decoding of TU information) In a case that a prediction error is included in the TU, the TU decoder 3024 decodes, from the coded data, a quantization prediction error, a transform index lfnst_idx, and the like.

(S2000: Generation of prediction image) The prediction image generation unit 308 generates a prediction image, based on the prediction information, for each block included in the target CU.

(S3000: Inverse quantization and inverse transform) The inverse quantization and inverse transform processing unit 311 performs inverse quantization and inverse transform processing on each TU included in the target CU. As quantization methods, two methods of scalar quantization and dependent quantization are provided. The dependent quantization includes multiple quantizers with different levels. The parity of intermediate values of the quantized transform coefficients is used to switch among four or eight states QState. Then, quantization and inverse quantization are performed in accordance with the QState.

(S4000: Generation of decoded image) The addition unit 312 generates a decoded image of the target CU by adding the prediction image supplied by the prediction image generation unit 308 and the prediction error supplied by the inverse quantization and inverse transform processing unit 311.

(S5000: Loop filter) The loop filter 305 generates a decoded image by applying a loop filter such as a deblocking filter, an SAO, and an ALF to the decoded image.

The loop filter 305 is a filter provided in the coding loop, and is a filter that removes block distortion and ringing distortion and improves image quality. The loop filter 305 applies a filter such as a deblocking filter, a sample adaptive offset (SAO), and an adaptive loop filter (ALF) to a decoded image of a CU generated by the addition unit 312.

The reference picture memory 306 stores the decoded image of the CU generated by the addition unit 312 in a predetermined position for each target picture and target CU.

The prediction parameter memory 307 stores a prediction parameter in a position predetermined for each CTU or CU to be decoded.

To the prediction image generation unit 308, the prediction parameter and the like are input. The prediction image generation unit 308 reads a reference picture from the reference picture memory 306. The prediction image generation unit 308 generates a prediction image of a block or a subblock by using the prediction parameter and the read reference picture (reference picture block) in the prediction mode indicated by the prediction mode predMode. Here, the reference picture block refers to a set of pixels (referred to as a block because they are normally rectangular) on a reference picture and is a region that is referred to for generating a prediction image.

The prediction parameter derivation unit 320 derives a prediction parameter with reference to the prediction parameters stored in the prediction parameter memory 307 based on the syntax element input from the parameter decoder 302. The prediction parameters are output to the prediction image generator unit 308

In a case that predMode indicates the inter prediction, the prediction image generator unit 308 generates a prediction image of a block or a subblock through the inter prediction or the intra prediction by using the inter prediction parameters received from the prediction parameter derivation unit 320 and the reference picture. The prediction image generation unit 308 outputs the generated prediction image of the block to the addition unit 312.

The inverse quantization and inverse transform processing unit 311 performs inverse quantization on a quantized transform coefficient input from the parameter decoder 302 to calculate a transform coefficient.

A technique that performs no transform is referred to as Transform Skip. The transform skip includes only scaling of transform coefficients in accordance with the quantization parameter. Whether the transform skip is used is signaled using a syntax element transform_skip_flag. transform_skip_flag may be signaled for each color component (cIdx) of Y, Cb, or Cr.

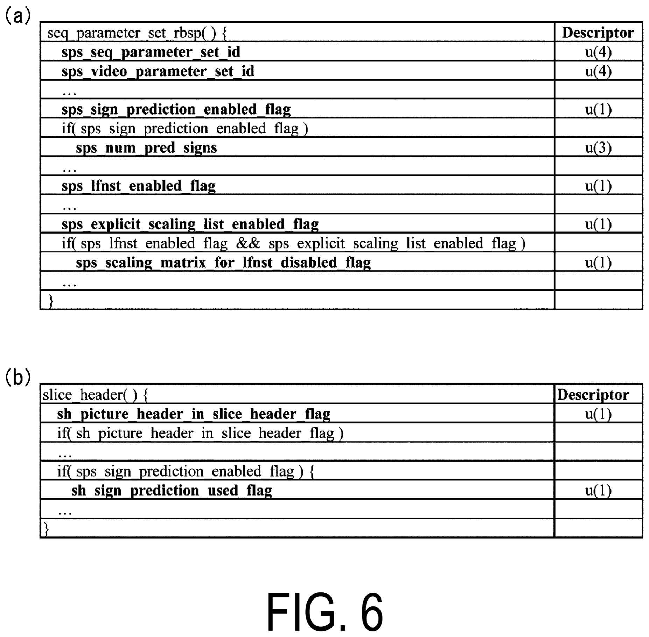

As illustrated in FIG. 6(a), the parameter decoder 302 may decode a parameter sps_sign_prediction_enabled_flag for the sign prediction from the coded data (for example, the SPS). sps_sign_prediction_enabled_flag is a flag indicating whether the sign prediction is used in a CLVS. In a case that sps_sign_prediction_enabled_flag is 1, it is indicated that the sign prediction is used in the CLVS. In a case that sps_sign_prediction_enabled_flag is 0, it is indicated that the sign prediction is not used in the CLVS. The Coded Layer Video Sequence (CLVS) indicates a series of access units (AUs) in the same layer. In a case that the sign prediction is used (sps_sign_prediction_enabled flag is 1), the parameter decoder 302 may decode sps_num_pred_signs. sps_num_pred_signs indicates the number of signs (code information) to be predicted.

sps_lfnst_enabled_flag of FIG. 6(a) is a parameter indicating whether lfnst_idx is present in syntax related to intra coding. In a case that sps_lfnst_enabled_flag is 1, it is indicated that lfnst_idx is present in the syntax related to intra coding. In a case that sps_lfnst_enabled_flag is 0, it is indicated that lfnst_idx is not present in the syntax related to intra coding. sps_explicit_scaling_list_enabled_flag is a parameter indicating whether an explicit scaling list signaled in the scaling list APS is used.

As illustrated in FIG. 6(b), in a case that sps_sign_prediction_enabled_flag is 1, the parameter decoder 302 may decode a flag sh_sign_prediction_used_flag related to the sign prediction. sh_sign_prediction_used_flag is a flag indicating whether the sign prediction is used in the current slice. In a case that sh_sign_prediction_used_flag is 1, it is indicated that the sign prediction is used in the current slice. In a case that sh_sign_prediction_used_flag is 0, it is indicated that the sign prediction is not used in the current slice.

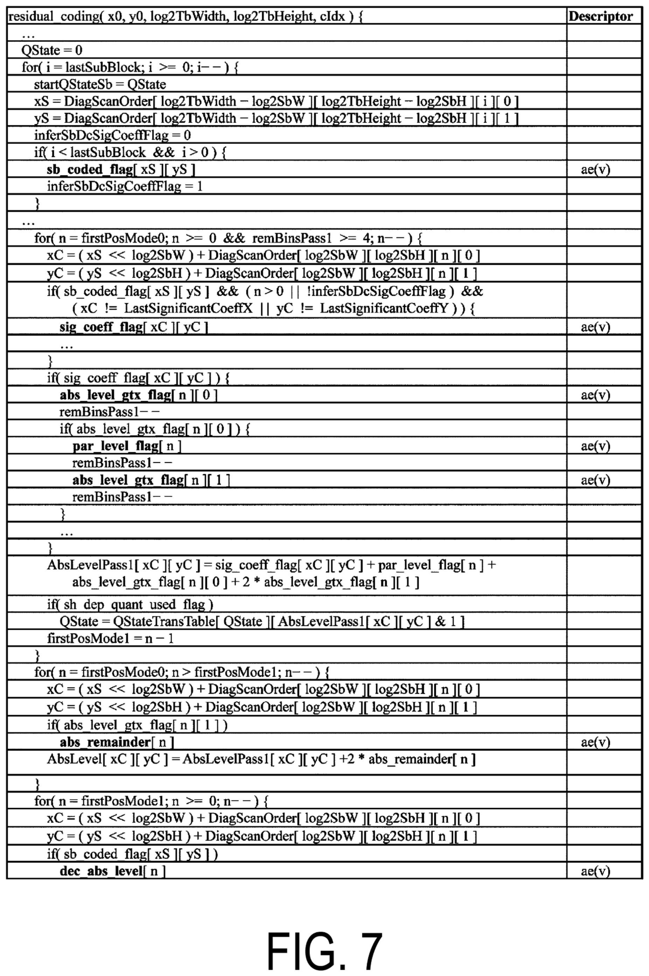

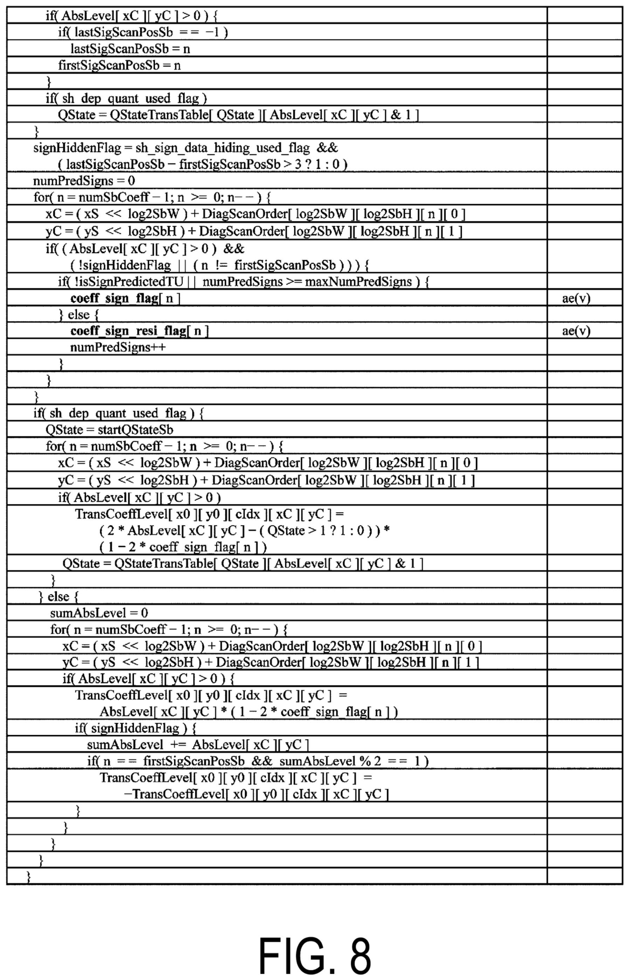

FIGS. 7 and 8 are syntaxes indicating coding methods for transform coefficients (prediction errors).

In the normal prediction error coding method with no transform skip (FIGS. 7 and 8), the TU decoder 3024 decodes a syntax element (not illustrated) indicating the LAST position to derive the LAST position (LastSignificantCoeffX, LastSignificantCoeffY). The LAST position is the position of the last non-zero coefficient in a case that the transform coefficients of the TU are scanned in a direction from low frequency components to high frequency components. In a case that the transform coefficients (coefficients) are coded or decoded in order of decreasing frequency component, the LAST position indicates the position of a quantized transform coefficient to be decoded first. Then, the TU decoder 3024 decodes sb_coded_flag with reference to the LAST position. The sb_coded_flag is a flag indicating whether a subblock includes a non-zero coefficient. The subblock is a region corresponding to each of 4 x 4 units into which the TU is split. In a case that sb_coded_flag = 1 (the subblock includes a non-zero coefficient), the TU decoder 3024 decodes sig_coeff_flag. sig_coeff_flag is a flag indicating whether the coefficient value is non-zero. In a case that sig_coeff_flag = 1 (coefficient value is non-zero), the TU decoder 3024 decodes abs_level_gtx_flag, par_level_flag, abs_remainder, and dec_abs_level. These are syntax elements that indicate the absolute values of the coefficients. abs_level_gtx_flag[n][j] is a flag indicating whether the absolute value of the coefficient at a scan position n is greater than $(j << 1) + 1$. In a case that abs_level_gtx_flag[n][j] is not signaled, abs_level_gtx_flag[n][j] is inferred to be 0. par_level_flag[n] is the parity of the coefficient at the scan position n. In a case that par_level_flag[n][j] is not signaled, par_level_flag[n][j] is inferred to be 0. abs_remainder[n] represents the remaining absolute value of the coefficient at the scan position n and is decoded by a Golomb-Rice code. In a case that abs_remainder[n] is not signaled, abs_remainder[n] is inferred to be 0. dec_abs_level[n] is the absolute value of the residual for deriving the absolute value of the coefficient at the scan position n. In a case that dec_abs_level[n] is not signaled, dec_abs_level[n] is inferred to be 0. The TU decoder 3024 derives the absolute values of the coefficients from these syntax elements. Hereinafter, the parameter used for decoding of the transform coefficient is a syntax element in the coded data or a variable decoded from the syntax element, and is used for deriving the transform coefficient. For example, the quantization parameter, the last position (LastSignificantCoeffX, LastSignificantCoeffY), a flag (sig_coeff_flag, abs_level_gtx_flag) indicating whether the transform coefficient is greater than a prescribed value, par_level_flag, and the residual (abs_remainder, dec_abs_level) are parameters used for decoding of the transform coefficient. The parameters used for decoding the transform coefficients are not limited to the above-described parameters.

The TU decoder 3024 sets a variable numPredSigns indicating the number of predicted transform coefficients equal to 0. In a case that, in a coefficient being non-zero and for which sign hiding is not used, the sign prediction is not applied or the current number of signs to be predicted is equal to or greater than a maximum number of signs to be predicted, the TU decoder 3024 decodes a syntax coeff_sign_flag[n] indicating the sign. In a case that the sign prediction is not applied to TU, it is represented by isSignPredictedTU = 0. In a case that the sign prediction is applied to TU, it is represented by isSignPredictedTU = 1. In a case that the number of signs to be predicted is equal to or greater than the maximum number of signs to be predicted, it is represented by numPredSigns >= maxNumPredSigns. The maximum number of signs to be predicted is 8, for example. Alternatively, the maximum number of signs to be predicted is sps_num_pred_signs. coeff_sign_flag[n] represents the sign of the coefficient at the scan position n. On the other hand, in a case that the sign prediction is applied in a non-zero coefficient, the TU decoder 3024 decodes a sign prediction parameter (coeff_sign_resi_flag[n], coefficient sign prediction error, coefficient prediction syntax). coeff_sign_resi_flag[n] indicates a prediction error of the sign of the coefficient at the scan position n (whether the prediction is true). Each time the TU decoder 3024 decodes the sign prediction parameter, the TU decoder 3024 increments the number of predicted signs numPredSigns by 1.

In a case that the sign prediction is not applied, the TU decoder 3024 decodes the sign of the transform coefficient from the coded data, and derives the transform coefficient from the absolute value of the coefficient and the decoded sign. On the other hand, in a case that the sign prediction is applied, the TU decoder 3024 derives the sign from a prediction value of the sign derived in the sign prediction unit 31110 and the decoded sign prediction parameter, and derives the transform coefficient from the absolute value of the coefficient and the derived sign. The sign prediction and the sign prediction unit 31110 will be described later.

Examples of Other Syntax of Sign Prediction

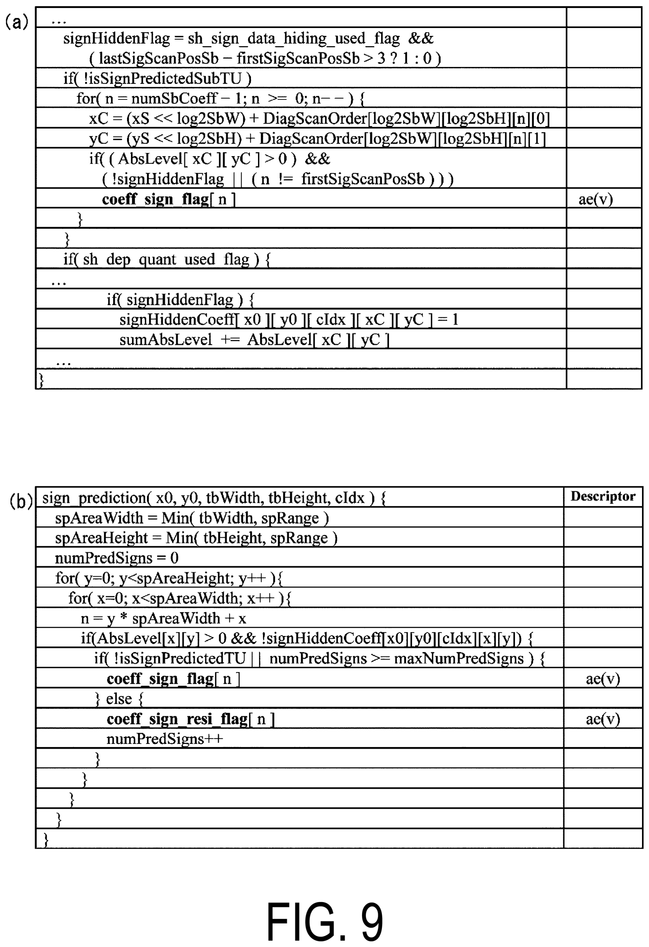

The parameter decoder 302 may use the configurations illustrated in FIG. 9 for decoding of the syntax of the sign prediction. FIG. 9(a) is an example of syntax indicating the TU decoder 3024, which is different from FIG. 9. After the TU decoder 3024 decodes the absolute value of the coefficient, in a case that the sign prediction is not applied (isSignPredictedSubTU is 0), the TU decoder 3024 decodes the syntax coeff_sign_nag[n] indicating the sign of the coefficient at the scan position n. In a case that the sign prediction is not applied to the subTU, it is represented by isSignPredictedSubTU = 0. In a case that the sign prediction is applied to the subTU, it is represented by isSignPredictedSubTU = 1. In a case that all of the following conditions are satisfied, isSignPredictedSubTU may be set equal to 1:

- isSignPredictedTU is 1;
- The target subblock size is equal to or greater than a prescribed size (for example, the width is equal to or greater than 4 and the height is equal to or greater than 4);
- The target subblock is present within a range of (spRange) x (spRange) from the top left position of the target block;

In a case that all of the following conditions are satisfied, isSignPredictedTU may be set equal to 1:

- sps_num_pred_signs is greater than 0;
- Transform skip is not used in the target block;
- The width of the TU block size is equal to or greater than a prescribed size (for example, the width is equal to or greater than 4 and the height is equal to or greater than 4);
- The width of the TU block size is equal to or less than maxSize, and the height of the TU block size is equal to or less than maxSize;

maxSize is a maximum TU size available for the sign prediction, and is 32 or 128, for example. Alternatively, maxSize may be determined as follows, depending on whether the target block is subjected to intra coding or inter coding.

maxSize = predMode == MODE_INTRA ? maxSizeIntra :maxSizeInter

For example, maxSizeIntra may be 32, and maxSizeInter may be 128. spRange represents a range to which the sign prediction can be applied. spRange is 4 or 32, for example.

In a case that the TU decoder 3024 applies sign hiding (signHiddenFlag is 1), the TU decoder 3024 sets signHiddenCoeff[x0][y0][cIdx][x][y] equal to 1. signHiddenCoeffjx0][y0][cIdx][x][y] is a variable indicating whether sign hiding is used for the color component cIdx and the coefficient at the position (x,y) in the TU whose top left position is (x0, y0).

FIG. 9(b) is an example of syntax related to the sign prediction. The CU decoder 3022 derives width spArea Width and height spAreaHeight of a range to which the sign prediction is applied from the block size tbWidth and tbHeight and spRange to which the sign prediction can be applied. Subsequently, the CU decoder 3022 performs the following processing in a coefficient being non-zero and for which sign hiding is not used (AbsLevel[x][y] > 0 and signHiddenCoeff [x0][y0][cIdx][x][y] is 0). In a case that the sign prediction is not applied in the target block (isSignPredictedTU is 0), or the sign prediction is not applied at the target scan position, the CU decoder 3022 decodes the syntax element coeff_sign_flag[n] indicating the sign. The case where the sign prediction is not applied at the target scan position is a case where the number of signs to be predicted is equal to or greater than the maximum number of signs to be predicted, for example, and it is represented by numPredSigns >= maxNumPredSigns. coeff_sign_flag[n] represents the sign of the coefficient at the scan position n. In contrast, in a case that the sign prediction is applied in the target block and at the scan position n, the CU decoder 3022 decodes the sign prediction parameter (coeff_sign_resi_flag[n], coefficient sign prediction error). coeff_sign_resi_flag[n] indicates a prediction error of the sign of the coefficient at the scan position n (whether the prediction is true). Each time the TU decoder 3024 decodes the sign prediction parameter, the TU decoder 3024 increments numPredSigns by 1. Here, isSignPredictedTU = isSignPredictedSubTU may be set.

Inverse Quantization and Inverse Transform

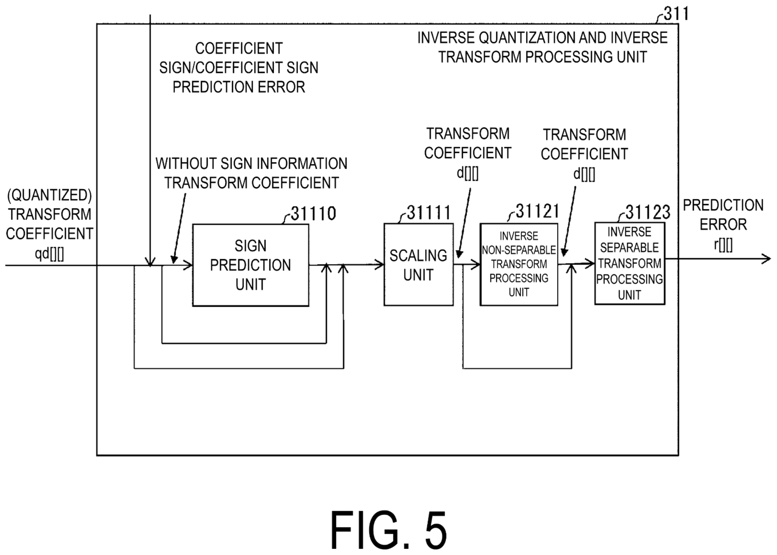

FIG. 5 is a block diagram illustrating a configuration of the inverse quantization and inverse transform processing unit 311 according to the present embodiment. The inverse quantization and inverse transform processing unit 311 includes a scaling unit 31111, a sign prediction unit 31110, an inverse non-separable transform processing unit 31121, and an inverse separable transform processing unit 31123.

The inverse quantization and inverse transform processing unit 311 scales (inverse-quantizes) the quantized transform coefficient qd[][] input from the entropy decoder 301 to derive a transform coefficient without sign information, using the scaling unit 31111. The quantized transform coefficient qd[][] is obtained by further performing non-separable transform and quantization on a coefficient obtained by performing transform such as Discrete Cosine Transform (DCT) and Discrete Sine Transform (DST) and quantization on a prediction error, or a transformed coefficient, in coding processing. The sign prediction unit 31110 derives the transform coefficient d[][], using the absolute value of the transform coefficient, the sign prediction parameter, or the coefficient sign. In a case that lfnst_idx != 0, the inverse quantization and inverse transform processing unit 311 performs the inverse non-separable transform, using the inverse non-separable transform processing unit 31121. Further, inverse separable transform such as inverse DCT and inverse DST is performed on the transform coefficient, and the prediction error is calculated. In a case that lfnst_idx == 0, inverse separable transform such as inverse DCT and inverse DST is performed on the transform coefficient scaled by the scaling unit 31111, without performing the inverse non-separable transform, and the prediction error is calculated. The inverse quantization and inverse transform processing unit 311 outputs the prediction error to the addition unit 312.

Note that the inverse transform and the transform are paired processing, and thus the transform and the inverse transform may be interpreted as being replaced with each other. Alternatively, the transform may be referred to as forward transform in a case that the inverse transform is referred to as a transform. For example, the non-separable transform may be referred to as a forward non-separable transform in a case that the inverse non-separable transform is referred to as a non-separable transform. The separable transform is simply referred to as transform.

Sign Prediction Unit 31110 and Sign Prediction

In a case that the TU decoder 3024 decodes the signs of all of the coefficients of a transform block without using the sign prediction (isSignPredictedTU is 0), the scaled transform coefficient qd[][] and the coefficient sign are input to the scaling unit 31111. On the other hand, in a case that the TU decoder 3024 derives the signs of all of or a part of the coefficients of the transform block using prediction (isSignPredictedTU is 1), qd[][] and the sign prediction parameter are input to the sign prediction unit 31110.

The sign prediction unit 31110 may set the maximum number maxNumPredSigns of signs to be predicted. maxNumPredSigns is 0 to 8, for example. In the case of 0, the sign prediction is not performed. The parameter decoder 302 may decode the maximum number of signs to be predicted as sps_num_pred_signs, and set it equal to maxNumPredSigns.

Regarding the transform coefficients without the sign information, the sign prediction unit 31110 predicts the signs of the transform coefficients using the absolute value of the transform coefficients. Subsequently, the sign prediction unit 31110 modifies the prediction value (prediction sign) of the signs of the transform coefficients, based on the sign prediction parameter (coefficient sign prediction error) obtained by decoding in the parameter decoder 302. Specifically, the sign prediction unit 31110 modifies the prediction sign and derives the sign, using XOR of a value of the prediction sign and a value of the sign prediction parameter.

Sign = prediction sign XOR sign prediction parameter

Here, the modification may be performed on the prediction sign and the sign prediction parameter of one transform coefficient. In this case, each of the prediction sign and the sign prediction parameter is 0 or 1. Alternatively, the modification may be performed on the prediction sign and the sign prediction parameter of a sequence of multiple transform coefficients. In this case, each of the prediction sign and the sign prediction parameter is a sequence including 0 or 1.

Note that the sign prediction unit 31110 may derive the sign by reversing a prediction sign sign_Pred[n] depending on whether the sign prediction parameter is 0 or 1. sign_Pred[n] indicates the coefficient sign at the scan position n, and indicates plus in a case of 0 and indicates minus in a case of 1.

coeff_sign_flag[n] = coeff_sign_resi_flag[n] != 0 ? 1 - signPred[n]:signPred[n]

The sign prediction unit 31110 may derive a transform coefficient TransCoeffLevel, using the derived sign.

$$TransCoeffLevel = (1 - 2 * coeff\_sign\_flag[n]) * AbsLevel$$

Alternatively, the sign prediction unit 31110 may reverse the sign of the absolute value AbsLevel[n] of the transform coefficient at the scan position n, and thereby derive a transform coefficient coeff.

$$Coeff[n] = AbsLevel[n], tmpCoef = AbsLevel[n]$$

$$if (coeff\_sign\_resi\_flag[n] != 0) coeff[n] = -tmpCoef$$

The transform coefficient d[x][y] whose sign is predicted and modified is output to the inverse separable transform processing unit 31123 or the inverse non-separable transform processing unit 31121.

Flow of Processing of Sign Prediction

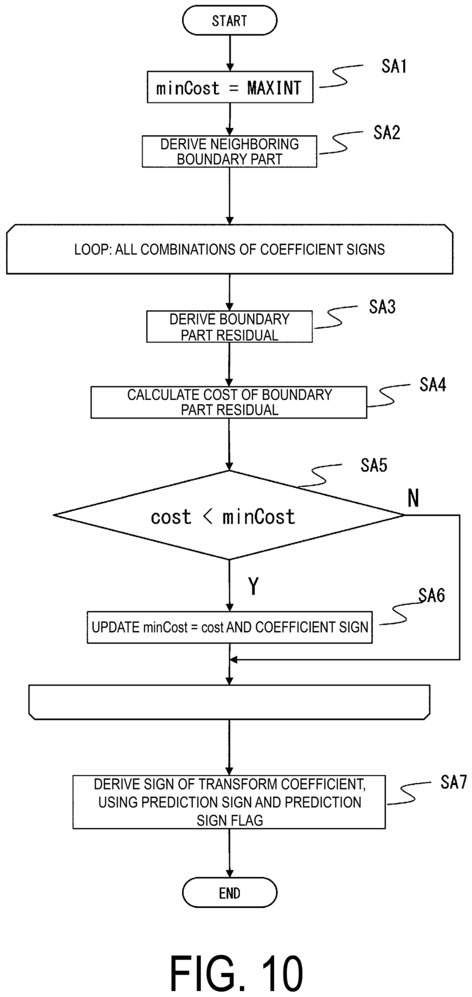

FIG. 10 is a flowchart illustrating the sign prediction. The sign prediction unit 31110 sets a value of a variable minCost equal to a prescribed positive number, for example, an upper limit of an integer (MAXINT) (SA1). Next, the sign prediction unit 31110 derives pixels R located at the boundary of the target block in left and top neighboring blocks (SA2). For all of the combinations of the signs of the transform coefficients as a target of prediction, the sign prediction unit 31110 derives values of residuals (boundary part residuals) in a case that the signs are used. In other words, candidate values of the transform coefficients are derived from the combinations of the candidates of the signs and the absolute value of the transform coefficients. The transform coefficient candidates are inversely transformed, and a boundary part residual r (provisional prediction residual) is derived (SA3). Furthermore, the sum of the boundary part residual r and a prediction image P of the target block may be derived as a temporary provisional decoded image in the boundary part. The sign prediction unit 31110 calculates a cost in the top direction and a cost in the left direction, using the pixels R adjacent to the top direction and the left direction and the pixel values derived in SA2 and SA3 (SA4).

Furthermore, the sign prediction unit 31110 performs prediction of the signs, using the cost in the top direction and the cost in the left direction. Specifically, the sign prediction unit 31110 determines whether a value of a cost being the sum of the cost in the top direction and the cost in the left direction is smaller than a value of the current optimal cost minCost (SA5). In a case that the value of the cost is smaller than the value of minCost (Y in SA5), the sign prediction unit 31110 updates the value of minCost with the value of the cost, and stores (updates) a combination of the signs of the transform coefficients corresponding to minCost (SA6). On the other hand, in a case that the value of the cost is equal to or greater than the value of minCost (N in SA5), the sign prediction unit 31110 does not perform the processing of Step SA6.

The sign prediction unit 31110 repeats the processing from Steps SA3 to SA6 for prescribed combinations of the signs of the transform coefficients being a prediction target. The sign prediction unit 31110 sets the combination of the signs of the transform coefficients corresponding to the value of minCost at the time point of end of the loop equal to the prediction sign of the transform coefficient. Here, the prescribed combinations may be all of the combinations of the signs of the transform coefficients in which the signs are not decoded from the coded data.

Finally, the sign prediction unit 31110 modifies the derived prediction sign of the transform coefficient, based on the sign prediction parameter (coefficient sign prediction error) input from the parameter decoder 302 (SA7).

Generation of Boundary Part Residual Using Templates

An example of a calculation method of the cost (for example, the residual) in the boundary part of the target block by the sign prediction unit 31110 will be described below. The sign prediction unit 31110 performs calculation of the cost, using provisional decoded pixel values of top edge pixels and left edge pixels of the target block and the pixels R adjacent to the top side or the left side of the target block. A method to be described later "calculation of cost" may be used as calculation of the cost. The provisional decoded pixel values of the target block are derived from the sum of a prediction value of the residual, r, and the prediction image of the target block, P.

The sign prediction unit 31110 may perform inverse transform processing and generate the boundary part residuals for all of the combinations of the signs of the transform coefficients as the prediction target. However, the sign prediction unit 31110 can generate the boundary part residual with high efficiency by performing calculation using templates.

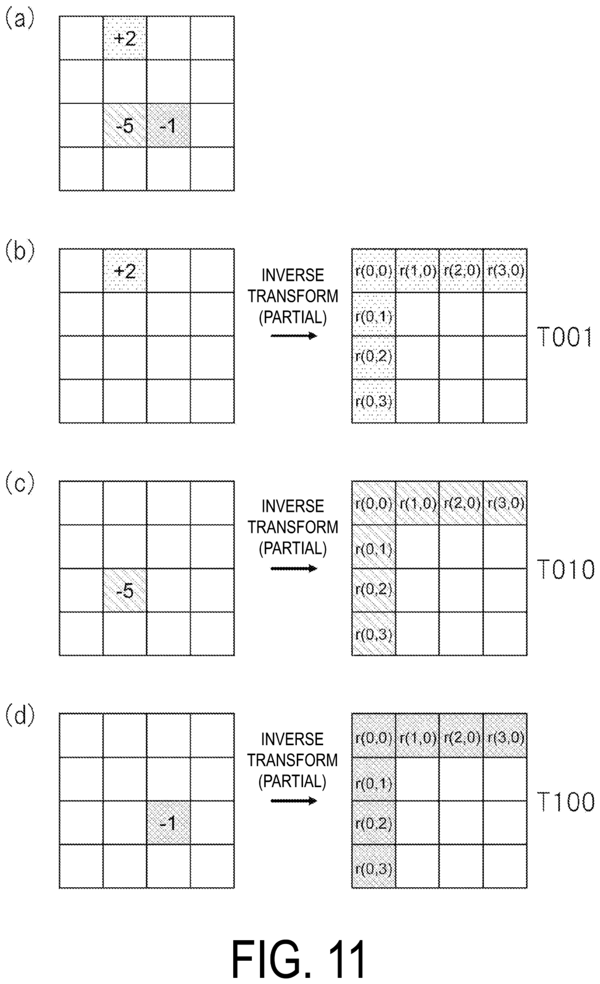

FIG. 11(a) is a diagram illustrating an example of coefficients as the prediction target. FIGS. 11(b) to (d) are diagrams illustrating templates different from each other. With reference to FIGS. 11(a) to (d), a calculation method using the templates will be described below.

In the following example, $c(x,y)$ indicates the transform coefficient at coordinates $(x,y)$ $(x = 0, ..., 3, y = 0, ..., 3)$. The following example assumes that, for three transform coefficients as illustrated in FIG, 11(a), the sign prediction is performed starting from a state in which the absolute values are known.

$$c(2,2) = -1,$$

$$c(1,2) = -5,$$

and

$$c(1,0) = +2$$

Note that prediction is not performed for the transform coefficients other than $c(2,2)$, $c(1,2)$, and $c(1,0)$, and thus signs of decoded syntax elements are used for the transform coefficients.

In the following example, the boundary part residual is represented by Habc. Here, a, b, and c respectively correspond to the signs of $c(2,2)$, $c(1,2)$, and $c(1,0)$, each of which is 0 or 1. In a case that a, b, and c are 0, the corresponding transform coefficients are positive, and in a case that a, b, and c are 1, the corresponding transform coefficients are negative.

In this case, the sign prediction unit 31110 generates the boundary part residual through the following procedure. First, in a case that coefficients of all of the signs are positive, that is, regarding the following, the sign prediction unit 31110 generates a boundary part residual H000 through the inverse transform processing.

$$C(2,2) = +1$$

$$C(1,2) = +5$$

$$C(1,0) = +2$$

Next, as illustrated in FIGS. 11(b) to (d), in a case that the sign of only one of the transform coefficients as the prediction target is positive and the absolute value of other coefficients is 0, that is, regarding each of the following, the sign prediction unit 31110 generates a boundary part residual through the inverse transform processing

$$\text{(A) } c(1,0) = +2, c(1,2) = 0, c(2,2) = 0 \text{ (see (b) of FIG. 11}$$

$$\text{(B) } c(1, 0) = 0, c(1,2) = +5, c(2,2) = 0 \text{ (see (c) of FIG. 11}$$

(C) c(1,0) = 0, c(1,2) = 0, c(2,2) = +1 (see (d) of FIG. 11)

Here, the boundary part residuals in the cases of (A) to (C) above are respectively expressed as templates T001, T010, and T100. In this case, the sign prediction unit 31110 can calculate the boundary part residual Habc other than H000, using the following expression.

- 

$$H001 = H000 - 2 * T001$$

- 

$$H010 = H000 - 2 * T010$$

- 

$$H011 = H010 - 2 * T001$$

- 

$$H100 = H000 - 2 * T100$$

- 

$$H101 = H100 - 2 * T001$$

- 

$$H110 = H100 - 2 * T010$$

- 

$$H111 = H110 - 2 * T001$$

According to the above procedure, after generating the boundary part residual H000 and the templates T001, T010, and T100 through the inverse transform processing, the sign prediction unit 31110 can generate other boundary part residuals through subtraction processing. Thus, the amount of processing of the boundary part residuals corresponding to all (eight) of the combinations of the signs of the coefficients as the prediction target can be reduced as compared to a case of generating each through the inverse transform processing.

Similarly, also in a case that the number of transform coefficients as the prediction target is 1, 2, 4 or greater, by generating only the following through the inverse transform processing, the boundary part residuals can be generated without performing the inverse transform processing for other combinations:

- Boundary part residual in a case that the signs of the transform coefficients as the prediction target are all positive;
- Boundary part residual (template of each transform coefficient in a case that the sign of any one of the transform coefficients as the prediction target is positive and the absolute value of other transform coefficients is 0.

Calculation of Cost

A calculation method of the boundary part residual by the sign prediction unit 31110 will be described below. Note that, in the following description as well, "top" means a direction in which the y coordinate is decreased and "left" means a direction in which the x coordinate is decreased.

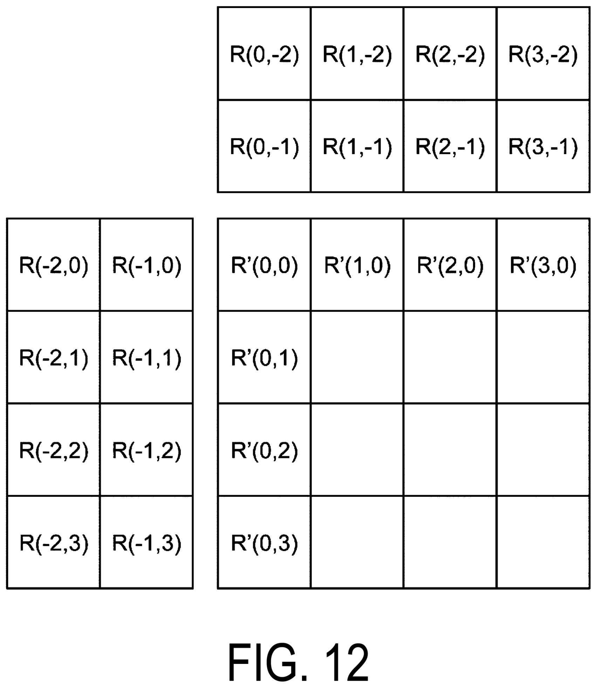

FIG. 12 is a diagram illustrating the boundary part residuals and pixels around the boundary part residuals. As illustrated in FIG. 12, in each provisional decoded image, the following pixel values are referred to, with top left coordinates of the target block being (0,0):

- Pixels P(x,0) of prediction images at coordinates (0,0) to (3,0) located at a top edge of the target block;
- Pixels P(0,y) of prediction images at coordinates (0,0) to (0,3) located at a left edge of the target block;
- Pixels r(x,0) of boundary part residuals at coordinates (0,0) to (3,0) located at a top edge of the target block;
- Pixels r(0,y) of boundary part residuals at coordinates (0,0) to (0,3) located at a left edge of the target block;
- Pixels R(x,-1) and R(x,-2) at coordinates (0,-1) to (3,-1) and coordinates (0,-2) to (3,-2) of blocks adjacent to the top side of the target block;
- Pixels R(-1,y) and R(-2,y) at coordinates (-1,0) to (-1,3) and coordinates (-2,0) to (-2,3) of blocks adjacent to the left side of the target block.

Here, x = 0, ..., tbWidth - 1, and y = 0, ..., tbHeight - 1. Although FIG. 12 illustrates blocks with tbWidth = 4 and tbHeight = 4, the same applies to all of the block sizes.

The sign prediction unit 31110 calculates the cost "cost", using the following expression of <F_COST1>.

<F_COST1>

$$cost = costU + costL$$

$$costU = \Sigma |(- R(x,-2) + 2 * R(x,-1) - P(x,0)) - r(x,0)| \ (x = 0..tbWidth-1)$$

$$costL = \Sigma |(- R(-2,y) + 2 * R(-1,x) - P(0,y)) - r(0,y)| (y = 0..tbHeight-1)$$

Here, for cost, the following expression of <F_COST2> may be used.

<F_COST2>

$$cost = costU + costL$$

$$costU = \Sigma | R(x,-1) - (P(x,0) + r(x,0)) | \ (x = 0..tbWidth-1)$$

$$costL = \Sigma | R(-1,x) - (P(0,y) + r(0,y)) | \ (y = 0..tbHeight-1)$$

costU indicates the cost for the pixels adjacent to the top side (cost in the top direction), and costL indicates the cost for the pixels adjacent to the left side (cost in the left direction). R(x,y) represents a decoded pixel value at the coordinates (x,y) of a neighboring block, P(x,y) represents a prediction pixel value at the coordinates (x,y) of the target block, and r(x,y) represents a residual value at the coordinates (x,y) of the target block. The sum obtained by adding the residual value r(x,y) to the prediction pixel value P(x,y) corresponds to the decoded pixel value of the target block (R'(x,y) of FIG. 12).

Other Embodiment of Sign Prediction: Transform Coefficient Sort

The sign prediction unit 31110 may predict the signs in descending order of the absolute value AbsLevel of the transform coefficient. Specifically, the sign prediction unit 31110 may perform sorting in descending order regarding AbsLevel[n] at the position n obtained by decoding by the TU decoder 3024, and perform prediction in descending order.

Furthermore, in a case that dependent quantization is used (sh_dep_quant_used_flag is 1), the sign prediction unit 31110 performs temporary inverse quantization on AbsCoeff. sh_dep_ quant used flag is a flag indicating whether dependent quantization is used in the current slice, and in a case of 1, it is indicated that dependent quantization is used. The temporary inverse quantization includes updating a state "state" according to an update expression of state at each scan position n. The temporary inverse quantization is processing further including adding and subtracting an offset dependent on the state, to and from a left shift value of AbsLevel[n]. The sign prediction unit 31110 may perform the following processing as the processing of the temporary inverse quantization. n is a scan position of the transform coefficient.

state = 0
for each n // for (n = lastScanIdx; n >= 0; n--)

$$level = AbsLevel[n]$$

$$qIdx = (level << 1) - (state \ \& \ 1)$$

$$state = ((stateTransTab >> ((state << 3) + ((level \ \& \ 1) << 2))) \ \& \ 15)$$

stateTransTab is one of 0, 587280912, and 6274468666787591456, and the parameter decoder 302 may decode information indicating which is used. The sign prediction unit 31110 may perform sorting regarding the transform coefficient (qIdx) subjected to the temporary inverse quantization, and perform the sign prediction in order from the transform coefficient having a large value. In a case that the dependent quantization has four levels or eight levels, the following processing may be performed respectively.

$$qIdx = (level << 3) - (state \ \& \ 3)$$

$$qIdx = (level << 4) - (state \ \& \ 7)$$

Because the candidates of the signs are predicted in order from the transform coefficient having a large impact on the boundary part residuals, more accurate sign prediction can be performed, and there is an effect that coding efficiency enhances.

Other Embodiment of Sign Prediction: LFNST

The sign prediction unit 31110 may change the maximum number of signs to be predicted, maxNumPredSigns, depending on whether the non-separable transform (LFNST) is used. Specifically, the sign prediction unit 31110 may set maxNumPredSigns as follows.

maxNumPredSigns = ApplyLfnstFlag[cIdx] == 0 ? sps_num_pred_signs : 4

Note that maxNumPredSigns is not limited to the above numbers.

Other Embodiment of Sign Prediction: Block Size Restriction

The parameter decoder 302 may apply the sign prediction, using the block size. Specifically, the parameter decoder 302 decodes a maximum block size spArea available for the sign prediction, and the sign prediction unit 31110 derives signPredWidth and signPredHeight as follows.

$$signPredWidth = min(tbWidth, spArea)$$

$$signPredHeight = min(tbHeight, spArea)$$

tbWidht and tbHeight are the width and the height of the target block size. The sign prediction unit 31110 performs the sign prediction on the transform coefficients within a range indicated by (signPredWidth) x (signPredHeight) from the top left of a target TU block.

Other Embodiment of Sign Prediction: Block Size Dependence

In the sign prediction, as the number of signs to be predicted increases, the number of pixels in boundary part residuals exponentially increases, and accordingly a necessary amount of calculation also increases. For example, in a case that the number of signs to be predicted is 8, this requires $2^8 = 256$ calculations. Because the amount of calculation per pixel (the number of boundary part residuals) determines throughput, it is preferable that the number of signs to be predicted be equal to or less than a prescribed value.

In the present embodiment, the maximum number of signs to be predicted, maxNumPredSigns, is changed depending on the block size. The sign prediction unit 31110 may derive maxNumPredSigns as follows, depending on tbWidth and tbHeight.

$$\text{maxNumPredSigns} = \log2(\text{tbWidth}) + \log2(\text{tbHeight}) - 2$$

According to the above expression, for example, in a case that the block size is 4 x 4, maxNumPredSigns is 2, and in a case of 16 x 16, maxNumPredSigns is 6. In this case, the following expression holds.

$$\text{Amount of calculation} = 2^{\wedge}(\log2(\text{tbWidth}) + \log2(\text{tbHeight}) - 2) / (\text{tbWidth} * \text{tbHeight})$$
$$= (2^{\wedge}\log2(\text{tbWidth}) * 2^{\wedge}\log2(\text{tbHeight}) / 2^{\wedge}2 / (\text{tbWidth} * \text{tbHeight})$$
$$= \text{tbWidth} * \text{tbHeight} / 4 / (\text{tbWidth} * \text{tbHeight})$$
$$= 1 / 4$$

From the above expression, for all of tbWidth and tbHeight, the number of boundary part residuals (the amount of calculation) per pixel is 0.25.

The sign prediction unit 31110 may derive maxNumPredSigns as follows.

$$\text{maxNumPredSigns} = \log2(\text{tbWidth}) + \log2(\text{tbHeight}) - \text{NPbase}$$

Here, NPbase is a prescribed constant of 0 or greater, and is 2 or the like, for example. For example, in a case that the amount of calculation for one pixel value is NP, maxNumPredSigns can be derived according to the following expression.

$$2^{\wedge}\text{maxNumPredSigns} / (\text{tbWidth}*\text{tbHeight}) = \text{NP}$$

$$2^{\wedge}\text{maxNumPredSigns} = \text{NP} * (\text{tbWidth}*\text{tbHeight})$$

$$\text{maxNumPredSigns} = \log2(\text{NP}) + \log2(\text{tbWidth}) + \log2(\text{tbHeight})$$

Here, in a case that NPbase = -log2(NP), the above expression is obtained. In a case that NP = 1/4, NPbase = 2. Derivation may be performed as follows, using the restricted width and height described above.

$$\text{maxNumPredSigns} = \log2(\text{signPredWidth}) + \log2(\text{signPredHeight}) - \text{NPbase}$$

According to the above expression, the amount of calculation for one pixel value is NP, regardless of the block size.

Note that the sign prediction unit 31110 may derive maxNumPredSigns as follows.

$$\text{maxNumPredSigns} = \text{NPW} * \min(\log2(\text{tbWidth}), \log2(\text{tbHeight})) - \text{NPbase2}$$

Here, each of NPW and NPbase2 is a prescribed constant of 0 or greater, and is 2 or the like, for example. Note that, even with different order of min and log2, the same values are obtained.

$$\text{maxNumPredSigns} = \text{NPW} * \log2(\min(\text{tbWidth}, \text{tbHeight})) - \text{NPbase2}$$

According to the above expression, the worst-case complexity is NP.

The sign prediction unit 31110 may refer to the table to derive maxNumPredSigns as follows. For example, the following may be employed.

$$\text{idx} = \log2(\text{tbWidth}) + \log2(\text{tbHeight}) - \text{NPbase}$$

$$MaxNumPredSignsTable[] = \{ 0, 0, 1, 2, 3, 4, 5, 6, 7, 8, 8, . \}$$

$$maxNumPredSigns = MaxNumPredSignTable[idx]$$

idx may be obtained as follows.

$$idx = log2(NP) + log2(tbWidth) + log2(tbHeight)$$

The number of maxNumPredSigns may be reduced depending on the target block size. For example, the following may be employed.

$$maxNumPredSigns = 4 \text{ (the block size is equal to or smaller than a prescribed size)}$$

$$maxNumPredSigns = 8 \text{ (otherwise)}$$

Switching in multiple stages may be employed.

$$maxNumPredSigns = 4 \text{ (the block size is equal to or smaller than prescribed size 1)}$$

$$maxNumPredSigns = 6 \text{ (else if the block size is equal to or smaller than prescribed size 2)}$$

$$maxNumPredSigns = 8 \text{ (otherwise)}$$

The prescribed sizes for the block size are 4 x 4, 8 x 8, and the like. The prescribed size may be the minimum block size, and the number of maxNumPredSigns may be reduced in a case that the size of the target size is the minimum block size.

According to the present embodiment, in the sign prediction, the video decoding apparatus and the video coding apparatus change the maximum number of signs of the transform coefficients to be predicted, depending on the block size. Consequently, there is an effect that the worst-case complexity is not increased regardless of the block size.

Other Embodiment of Sign Prediction: Depending on QP

The sign prediction unit 31110 may change the operation of the sign prediction depending on a parameter used for decoding the transform coefficient of the target block. For example, the maximum number of signs to be predicted, maxNumPredSigns, may be changed depending on the quantization parameter of the target block (currQP). Specifically, the sign prediction unit 31110 may set maxNumPredSigns equal to a greater value of currQP as follows.

$$maxNumPredSigns = Clip3 (0, 8, currQP - NPbaseQP)$$

NPbaseQP is a number for offsetting currQP. For example, 18, 22, or the like may be used for the number, but the number is not limited thereto. As a result, the maxNumPredSigns decreases consistently with currQP, reducing the amount of calculation. In general, the amount of calculation increases with decreasing quantization parameter, and thus it is effective for reducing the amount of calculation of the sign prediction consistently with the quantization parameter.

Alternatively, currQP may be multiplied by a coefficient NPfactor for derivation as follows.

$$maxNumPredSigns = Clip3(0, 8, Round(NPfactor*(currQP - NPbaseQP)))$$

NPfactor is a coefficient for adjusting the value of the offset quantization parameter. Together with NPbaseQP, the relationship between currQP and maxNumPredSigns can be represented linearly. For example, 0.5 (1/2), 1, 2, or the like may be used, but the present invention is not limited thereto. Here, the value is converted into an integer by Round(), but round-down Floor() or round-up Ceil() may be used instead of the rounding.

Alternatively, the table may be referred to as follows.

$$maxNumPredSigns = TableMaxNumPredSignsFromQP[currQP]$$

Here, TableMaxNumPredSignsFromQP is a table for converting currQP into maxNumPredSigns. The elements of the table are the possible values of maxNumPredSigns. Using this method allows currQP and maxNumPredSigns to be mapped non-linearly. For example, the elements of the table may be set so as to cause maxNumPredSigns with a relatively large value to be derived in a central portion of a value range of the quantization parameter.

According to the present embodiment, in the sign prediction, the video decoding apparatus and the video coding apparatus change, in the sign prediction, the maximum number of signs of the transform coefficients to be predicted depending on the quantization parameter (QP). This is effective for preventing an increase in the amount of calculation depending on the quantization parameter.

Other Embodiment of Sign Prediction: Depending on Transform Coefficient

The sign prediction unit 31110 may change the operation of the sign prediction depending on a parameter used for decoding the transform coefficient. In particular, whether to perform the sign prediction may be switched depending on the state of the transform coefficient of the target block. The maximum number of signs to be predicted, maxNumPredSigns, may be changed depending on the state of the transform coefficient of the target block. The throughput of coding and decoding increases consistently with the transform coefficient, thus increasing the throughput due to the sign prediction and the throughput of coefficient coding and decoding in combination. The worst-case complexity can be reduced by the following operation. Further, the relative code amount decreases with increasing number of transform coefficients, and thus fails to be commensurate with the throughput of the sign prediction. Thus, switching off the sign prediction is appropriate in terms of the coding efficiency. Note that the state of the transform coefficient may be the last position, the number of transform coefficients, the number of values of sig_coeff_flag, the number of values of a gt1 flag (or abs_level_gtx_flag[n][0]) and a gt2 flag (or abs_level_gtx_flag[n][1]), or the number of values derived from the above-described values. sig_coeff_flag is a flag indicating whether the coefficient is non-zero. The gt1 flag is a flag indicating whether the absolute value of the coefficient is greater than 1. The gt2 flag is a flag indicating whether the absolute value of the coefficient is greater than 2. abs_level_gtx_flag[n][1] is a flag indicating whether the absolute value of the coefficient is greater than 3. As illustrated in FIG. 7, in a configuration in which a value (remBinPass1) is decremented by 1 each time the flag is decoded, complexity occurs in a case that the remBinPass1 is 0 is complicated. Therefore, a configuration may be used in which the sign prediction is not performed or maxNumPredSigns is reduced. Alternatively, a variable may be used that is incremented rather than being decremented each time the flag is decoded, and the sign prediction may not be performed or maxNumPredSigns may be reduced in a case that the number of variables exceeds a prescribed value.

Other Embodiment of Sign Prediction: Depending on Transform Coefficient Last

The sign prediction unit 31110 may use the LAST position as the state of the transform coefficient, and set maxNumPredSigns smaller as the LAST coefficient is positioned in a higher frequency region (as the coordinates are greater).

$$maxNumPredSigns = Clip3(0, 8, 8 - (LastSignificantCoeffX + LastSignificantCoeffY) >> 3)$$

Here, LastSignificantCoeffX and LastSignificantCoeffY correspond to the position (X,Y) of the last coefficient with the top left of the target block as a reference (0,0).

Alternatively, maxNumPredSigns may be switched according to a prescribed value TH as follows.

maxNumPredSigns = LastSignificantCoeffX + LastSignificantCoeffY > TH ? M:N

M and N are prescribed constants (M < N). For example, M = 2, N = 4.

Further, in a case that the position of the last coefficient is in the high frequency region, the sign prediction may not be performed.

```
if (LastSignificantCoeffX + LastSignificantCoeffY > TH) {
    sign prediction is performed
} else {
    sign prediction is not performed
}
```

The following may also be used.

maxNumPredSigns = LastSignificantCoeffX + LastSinificantCoeffY > TH ? 0 : N

Further, the following may be used.

```
if (LastSignificantCoeffX >= TH || LastSignificantCoeffY >= TH) {
  sign prediction is performed
} else {
  sign prediction is not performed
```

For example, in a case that the sub-block size of the transform unit is 4 x 4, TH may be 4.

Derivation may be performed using calculation.

$$maxNumPredSigns = (LastSignificantCoeffX + LastSinificantCoeffY) / NPLastDiv$$

$$maxNumPredSigns = (LastSignificantCoeffX + LastSinificantCoeffY) >> NPLastShift$$

Here, the NPLastDiv and the NPLastShift are prescribed constants or values derived from the block size.

Other Embodiment of Sign Prediction: Number of Transform Coefficients, Number of Transform Coefficients Larger than Predetermined

The sign prediction unit 31110 may control the sign prediction processing according to the number of non-zero transform coefficients of the target block or the number of transform coefficients greater than a prescribed value. For example, the sign prediction unit 31110 may switch on and off the sign prediction according to the value of the levelCodedCoeff as follows.

```
if (levelCodedCoeff > NPth) {
  sign prediction is performed
} else {
  sign prediction is not performed
```

Here, levelCodedCoeff may be the number of non-zero transform coefficients numCodedCoeff, and levelCodedCoeff may use the sum of abs_level_gtx_flag[n][0], the sum of abs_level_gtx_flag[n][1], the sum of abs_level_gtx_flag[n][0] and abs_level_gtx_flag[n][1], or the number of decoded syntax elements for each type of syntax element.

NPth is a prescribed value that may be a fixed value, or may be a value derived from maxNumPredSigns or a value derived from the block size.

Specifically, the sign prediction unit 31110 may set maxNumPredSigns smaller as the number of non-zero transform coefficients numCodedCoeff is smaller as follows. numCodedCoeff may be derived from the sum of sig_coeff_flags.

$$maxNumPredSigns = levelCodedCoeff / NPNumDiv$$

$$maxNumPredSigns = levelCodedCoeff >> NPNumShift$$

NPNumDiv and NPNumShift are prescribed constants or values derived from the block size.

Further, the sign predicting unit 31110 may change the number of sign predictions in a case that the levelCodedCoeff exceeds a prescribed number NPth.

```
if (levelCodedCoeff > NPth) {
   maxNumPredSigns = maxNumPredSigns / NPdiv
```

For example, NPth = maxNumPredSigns * 4 may be satisfied. NPdiv is a fixed number such as 2. Alternatively, subtraction of NPsub may be performed as follows: NPsub is a fixed number such as 1 or 2.

```
if (levelCodedCoeff > NPth) {
   maxNumPredSigns = maxNumPredSigns - NPsub
}
```

Alternatively, the maxNumPredSigns may be reduced in proportion to the levelCodedCoeff as follows.

$$maxNumPredSigns = Clip3\ (0,\ 8,\ maxNumPredSigns * levelCodedCoeff / NPdiv)$$

According to the present embodiment, in the sign prediction, the maximum number of signs of the transform coefficients to be predicted is changed depending on the state of the transform coefficient. This is effective for preventing an increase in the amount of calculation depending on the state of the transform coefficient.

Other Embodiment of Sign Prediction: Exclusion

The sign prediction uses the results of the inverse quantization and the inverse transform of transform coefficients, and thus the sign prediction cannot be parallelized with the inverse quantization and the inverse transform. In other words, in a case that the sign prediction is added to the processes of the inverse quantization and the inverse transform, there is a problem in that the number of cycles required until deriving residuals may increase. In the present embodiment, scaling using the sign prediction, the non-separable transform, and the scaling matrix is exclusively performed, and therefore there is an effect that increase in the number of cycles is reduced.

Exclusion of Sign Prediction and Non-Separable Transform

Sequence-Level Exclusion

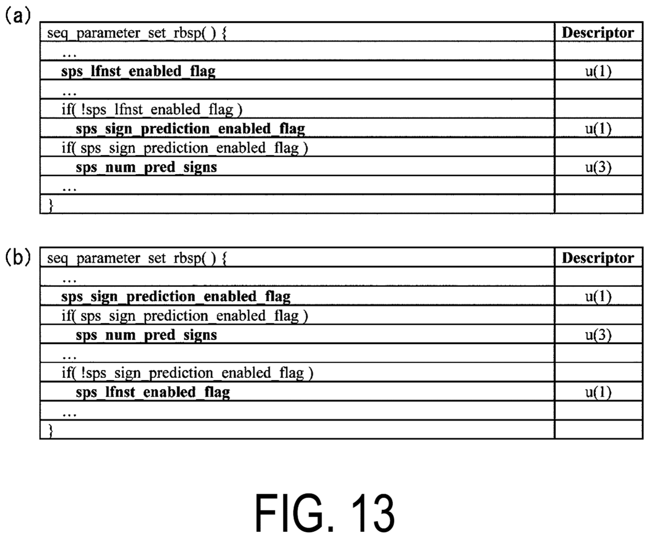

As illustrated in FIG. 13(a), the parameter decoder 302 decodes sps_lfnst_enabled_flag from the coded data, and decodes sps_sign_prediction_enabled_flag only in a case that sps_lfnst_enabled_flag is 0. In a case that sps_lfnst_enabled_flag is 1, sps_sign_prediction_enabled_flag is not decoded and is inferred to be 0.

The following configuration with the order being changed may be employed.

As illustrated in FIG. 13(b), the parameter decoder 302 decodes sps_sign_prediction_enabled_flag from the coded data, and decodes sps_lfnst_enabled_flag only in a case that sps_sign_prediction_enabled_flag is 0. In a case that sps_sign_prediction_enabled_flag is 1, sps_lfnst_enabled_flag is not decoded and is inferred to be 0.

Note that, in the above description, exclusive processing is performed between parameters of the SPS; however, similar decoding processing may be performed between a non-separable transform flag of the SPS and a sign prediction flag sh_sign_prediction_enabled_flag of the slice header to cause exclusive operation.

Target Block-Level Exclusion

In a case that the non-separable transform is used in the target block, that is, in a case that ApplyLfstFlag != 0 (lfnst_idx != 0) in the target block, the sign prediction unit 31110 does not perform the sign prediction in the target block. In a case that the non-separable transform is used in the target block, the parameter decoder 302 decodes the signs instead of the sign prediction parameter.

In a case that all of the following conditions are satisfied, isSignPredictedTU may be set equal to 1:

- sps_num_pred_signs is greater than 0;
- Transform skip is not used in the target block;

- The width of the TU block size is equal to or greater than 4 and the height of the TU block size is equal to or greater than 4;
- The width of the TU block size is equal to or less than maxSize, and the height of the TU block size is equal to or less than maxSize;
- The width of the target subblock size is equal to or greater than 4 and the height of the target subblock size is equal to or greater than 4;
- The target subblock is present within a range of (spRange) x (spRange) from the top left position of the target block;
- The non-separable transform is not used in the target block (ApplyLfnstFlag[cIdx] == 0).

Alternatively, in a case that all of the following conditions are satisfied, isSignPredictedTU may be set equal to 1:

- isSignPredictedSubTU is 1;
- The non-separable transform is not used in the target block (ApplyLfnstFlag[cIdx] == 0).

According to the configuration described above, the non-separable transform and the sign prediction are not simultaneously performed, and thus there is an effect of avoiding increase in latency.

Configuration of Video Coding Apparatus

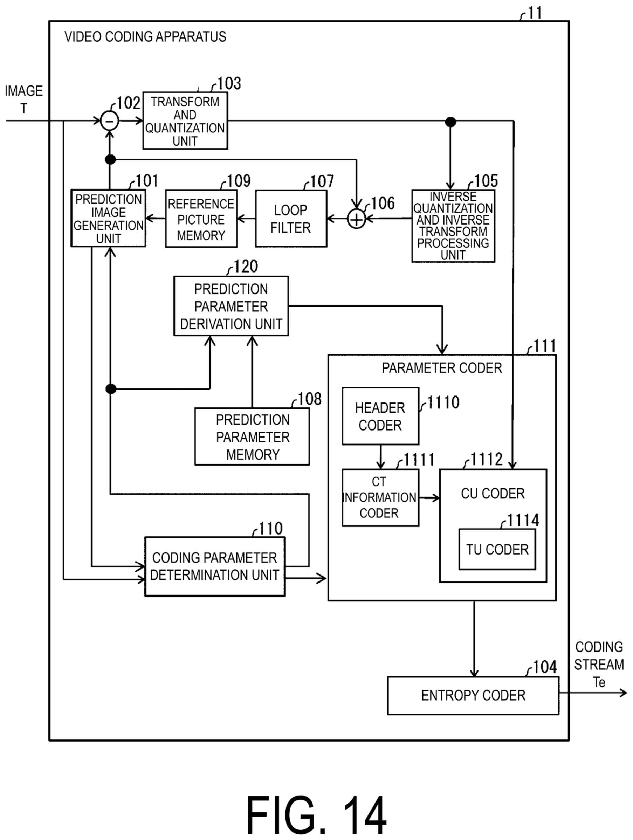

Next, a configuration of the video coding apparatus 11 according to the present embodiment will be described. FIG. 14 is a block diagram illustrating a configuration of the image coding apparatus 11 according to the present embodiment. The video coding apparatus 11 includes a prediction image generation unit 101, a subtraction unit 102, a transform and quantization unit 103, an inverse quantization and inverse transform processing unit 105, an addition unit 106, a loop filter 107, a prediction parameter memory (a prediction parameter storage unit or a frame memory) 108, a reference picture memory (a reference image storage unit or a frame memory) 109, a coding parameter determination unit 110, a parameter coder 111, a prediction parameter derivation unit 120, and an entropy coder 104.

The prediction image generation unit 101 generates a prediction image for each CU.

The subtraction unit 102 subtracts a pixel value of the prediction image of a block input from the prediction image generation unit 101 from a pixel value of an image T to generate a prediction error. The subtraction unit 102 outputs the prediction error to the transform and quantization unit 103.

The transform and quantization unit 103 performs a frequency transform on the prediction error input from the subtraction unit 102 to calculate a transform coefficient, and derives a quantized transform coefficient by quantization. The transform and quantization unit 103 outputs the quantized transform coefficient to the parameter coder 111 and the inverse quantization and inverse transform processing unit 105.

The transform and quantization unit 103 includes a separable transform processing unit (first transform processing unit), a non-separable transform processing unit (second transform processing unit), and a scaling unit.

The separable transform processing unit applies the separable transform to a prediction error. In a case that ApplyLfnstFlag is not 0, the non-separable transform processing unit performs the non-separable transform. The scaling unit performs scaling for a transform coefficient using a quantization matrix.

Specifically, the transform and quantization unit 103 performs the following processing.

S1: The separable transform processing unit performs the separable transform.

S2: The non-separable transform processing unit determines whether the non-separable transform is enabled (ApplyLfnstFlag != 0).

S3: In a case that the non-separable transform is enabled, the non-separable transform processing unit performs the non-separable transform (forward non-separable transform).

S3B: In a case that the non-separable transform is not enabled, the non-separable transform processing unit does not perform the non-separable transform (forward non-separable transform).

S4: The scaling unit performs scaling for a transform coefficient using a quantization matrix.

In the (forward) non-separable transform, processing substantially equivalent to the inverse non-separable transform is performed.

The inverse quantization and inverse transform processing unit 105 is the same as the inverse quantization and inverse transform processing unit 311 of the video decoding apparatus 31, and descriptions thereof are omitted. The calculated prediction error is output to the addition unit 106.

The parameter coder 111 includes a header coder 1110, a CT information coder 1111, and a CU coder 1112 (prediction mode coder). The CU coder 1112 further includes a TU coder 1114. General operation of each module will be described below.

The header coder 1110 performs coding processing of parameters such as header information, split information, prediction information, and quantized transform coefficients.

The CT information coder 1111 codes the QT and MT (BT, TT) split information and the like.

The CU coder 1112 codes the CU information, the prediction information, the split information, and the like.

In a case that a prediction error is included in the TU, the TU coder 1114 codes the QP update information and the quantization prediction error.

The CT information coder 1111 and the CU coder 1112 supply, to the parameter coder 111, syntax elements such as an inter prediction parameter, an intra prediction parameter, and the quantized transform coefficient.

The parameter coder 111 inputs the quantized transform coefficients and the coding parameters (split information and prediction parameters) to the entropy coder 104. The entropy coder 104 entropy-codes the quantized transform coefficients and the coding parameters to generate and output a coding stream Te.

The prediction parameter derivation unit 120 derives the intra prediction parameter and the inter prediction parameter from the parameters input from the coding parameter determination unit 110. The derived intra prediction parameter and inter prediction parameter are output to the parameter coder 111.

The addition unit 106 adds, for each pixel, the pixel value for the prediction block input from the prediction image generation unit 101 and the prediction error input from the inverse quantization and inverse transform processing unit 105 to generate a decoded image. The addition unit 106 stores the generated decoded image in the reference picture memory 109.

The loop filter 107 applies a deblocking filter, an SAO, and an ALF to the decoded image generated by the addition unit 106. Note that the loop filter 107 need not necessarily include the above-described three types of filters, and may include only a deblocking filter, for example.

The prediction parameter memory 108 stores the prediction parameters generated by the coding parameter determination unit 110 at a predetermined position for each target picture and CU.

The reference picture memory 109 stores the decoded image generated by the loop filter 107 at a predetermined position for each target picture and CU.

The coding parameter determination unit 110 selects one set among multiple sets of coding parameters. The coding parameters include QT, BT, or TT split information described above, a prediction parameter, or a parameter to be coded which is generated in relation to the aforementioned elements. The prediction image generation unit 101 generates a prediction image by using these coding parameters.

The coding parameter determination unit 110 calculates an RD cost value indicating the magnitude of an amount of information and a coding error for each of the multiple sets. The RD cost value is, for example, the sum of an amount of code and the value obtained by multiplying a square error by a coefficient $\lambda$. The code amount is an amount of information of the coding stream Te obtained by performing entropy coding on a quantization error and a coding parameter. The square error is the square sum of prediction errors calculated by the subtraction unit 102. The coefficient $\lambda$ is a real number greater than a preset zero. The coding parameter determination unit 110 selects a set of coding parameters of which the calculated cost value is a minimum value. The coding parameter determination unit 110 outputs the determined coding parameters to the parameter coder 111 and the prediction parameter derivation unit 120.

Note that a computer may be used to implement some of the video coding apparatus 11 and the video decoding apparatus 31 in the above-described embodiments, for example, the entropy decoder 301, the parameter decoder 302, the loop filter 305, the prediction image generation unit 308, the inverse quantization and inverse transform processing unit 311, the addition unit 312, the prediction parameter derivation unit 320, the prediction image generation unit 101, the subtraction unit 102, the transform and quantization unit 103, the entropy coder 104, the inverse quantization and inverse transform processing unit 105, the loop filter 107, the coding parameter determination unit 110, a parameter coder 111, and the prediction parameter derivation unit 120. In that case, this configuration may be realized by recording a program for realizing such control functions on a computer-readable recording medium and causing a computer system to read and perform the program recorded on the recording medium. Note that the "computer system" described here refers to a computer system built into either the video coding apparatus 11 or the video decoding apparatus 31 and is assumed to include an OS and hardware components such as a peripheral apparatus. In addition, the "computer-readable recording medium" refers to a portable medium such as a flexible disk, a magneto-optical disk, a ROM, and a CD-ROM, and a storage apparatus such as a hard disk built into the computer system. Moreover, the "computer-readable recording medium" may include a medium that dynamically stores a program for a short period of time, such as a communication line in a case that the program is transmitted over a network such as the Internet or over a communication line such as a telephone line, and may also include a medium that stores the program for a certain period of time, such as a volatile memory included in the computer system functioning as a server or a client in such a case. In addition, the above-described program may be one for implementing some of the above-described functions, and also may be one capable of implementing the above-described functions in combination with a program already recorded in a computer system.

A part or all of the video coding apparatus 11 and the video decoding apparatus 31 in the embodiment described above may be realized as an integrated circuit such as a Large Scale Integration (LSI). Each function block of the video coding apparatus 11 and the video decoding apparatus 31 may be individually realized as processors, or part or all may be integrated into processors. In addition, the circuit integration technique is not limited to LSI, and implementation as a dedicated circuit or a multi-purpose processor may be adopted. In addition, in a case that a circuit integration technology that replaces LSI appears as the semiconductor technologies advance, an integrated circuit based on that technology may be used.

Although an embodiment of the present invention has been described above in detail with reference to the drawings, the specific configurations thereof are not limited to those described above and various design changes or the like can be made without departing from the spirit of the invention.

An embodiment of the present invention is not limited to the embodiments described above and various changes can be made within the scope indicated by the claims. That is, embodiments obtained by combining technical measures appropriately modified within the scope indicated by the claims are also included in the technical scope of the present invention.

Industrial Applicability

The embodiments of the present invention can be preferably applied to a video decoding apparatus for decoding coded data in which image data is coded, and a video coding apparatus for generating coded data in which image data is coded. In addition, the embodiments of the present invention can be preferably applied to a data structure of coded data generated by the video coding apparatus and referred to by the video decoding apparatus.

Reference Signs List

31 Video decoding apparatus
301 Entropy decoder
302 Parameter decoder
3022 CU decoder
3024 TU decoder
305, 107 Loop filter
306, 109 Reference picture memory
307, 108 Prediction parameter memory
308, 101 Prediction image generation unit
309 Inter prediction image generation unit
311, 105 Inverse quantization and inverse transform processing unit
31110 Sign prediction unit
312, 106 Addition unit
320 Prediction parameter derivation unit
11 Video coding apparatus
102 Subtraction unit
103 Transform and quantization unit
104 Entropy coder
110 Coding parameter determination unit
111 Parameter coder
120 Prediction parameter derivation unit

**Claims**

1. A video decoding apparatus comprising:

   a parameter decoder configured to decode a transform coefficient and a sign prediction parameter from coded data; and
   a sign prediction unit configured to predict a sign of the transform coefficient, wherein
   for a candidate of a combination of signs of transform coefficients without sign information, the sign prediction unit predicts the sign based on a cost derived with reference to a boundary pixel with a neighboring block, and modifies the predicted sign of the transform coefficient using the sign prediction parameter obtained by decoding by the parameter decoder.

2. The video decoding apparatus according to claim 1, wherein the sign prediction unit changes operation of sign prediction depending on a parameter used for decoding of a transform coefficient of a target block.

3. The video decoding apparatus according to claim 2, wherein the parameter used for decoding the transform coefficient is a quantization parameter.

4. The video decoding apparatus according to claim 2, wherein the parameter used for decoding the transform coefficient is a last position of the transform coefficient.

5. The video decoding apparatus according to claim 2, wherein the parameter used for decoding the transform coefficient is a syntax element indicating whether the transform coefficient is greater than a prescribed value.

6. The video decoding apparatus according to claim 1, wherein the sign prediction unit determines whether to perform sign prediction depending on a parameter used for decoding of a transform coefficient of a target block.

7. The video decoding apparatus according to claim 1, wherein the sign prediction unit changes the number of signs to be predicted depending on a parameter used for decoding of a transform coefficient of a target block.

8. A video coding apparatus comprising:

   a parameter coder configured to code a transform coefficient and a sign prediction parameter; and
   a sign prediction unit configured to predict a sign of the transform coefficient, wherein
   for a candidate of a combination of signs of transform coefficients without sign information, the sign prediction unit predicts the sign based on a cost derived with reference to a boundary pixel with a neighboring block, and derives a sign prediction parameter indicating whether the predicted sign is the same as the sign of the transform coefficient.

9. The video coding apparatus according to claim 8, wherein the sign prediction unit changes the number of signs to be predicted depending on a quantization parameter of a target block.

| T | VIDEO CODING APPARATUS | Te | | Te | VIDEO DECODING APPARATUS | Td | VIDEO DISPLAY APPARATUS |

FIG. 1

(a) CODED VIDEO SEQUENCE

| VPS | SPS#0 | SPS#1 | PPS#0 | PPS#1 | SEI | PICT #0 | PICT #1 |
|-----|-------|-------|-------|-------|-----|---------|---------|

(b) CODED PICTURE

| SLICE 0 | SLICE 1 | - - - - - - - - - - - - - | SLICE NS-1 |
|---------|---------|---------------------------|------------|

(c) CODING SLICE

| SLICE HEADER | SLICE DATA |
|--------------|------------|

(d) CODING SLICE DATA

| CODING TREE UNIT (CTU) | CTU | CTU | CTU | CTU | CTU | CTU | CTU | CTU |
|------------------------|-----|-----|-----|-----|-----|-----|-----|-----|

(e) CODING TREE UNIT

(f) CODING UNIT

| CUH | PREDICTION PARAMETER | TRANSFORM PARAMETER | QUANTIZED TRANSFORM COEFFICIENT |
|-----|----------------------|---------------------|---------------------------------|

FIG. 2

26

FIG. 3

FIG. 4

FIG. 5

(a)

| seq_parameter_set_rbsp( ) { | Descriptor |
|---|---|
| sps_seq_parameter_set_id | u(4) |
| sps_video_parameter_set_id | u(4) |
| ... | |
| sps_sign_prediction_enabled_flag | u(1) |
| if( sps_sign_prediction_enabled_flag ) | |
| sps_num_pred_signs | u(3) |
| ... | |
| sps_lfnst_enabled_flag | u(1) |
| ... | |
| sps_explicit_scaling_list_enabled_flag | u(1) |
| if( sps_lfnst_enabled_flag && sps_explicit_scaling_list_enabled_flag ) | |
| sps_scaling_matrix_for_lfnst_disabled_flag | u(1) |
| ... | |
| } | |

(b)

| slice_header( ) { | Descriptor |
|---|---|
| sh_picture_header_in_slice_header_flag | u(1) |
| if( sh_picture_header_in_slice_header_flag ) | |
| ... | |
| if( sps_sign_prediction_enabled_flag ) { | |
| sh_sign_prediction_used_flag | u(1) |
| ... | |
| } | |

# FIG. 6

| residual_coding( x0, y0, log2TbWidth, log2TbHeight, cIdx ) { | Descriptor |
|---|---|
| ... | |
| QState = 0 | |
| for( i = lastSubBlock; i >= 0; i−− ) { | |
| startQStateSb = QState | |
| xS = DiagScanOrder[ log2TbWidth − log2SbW ][ log2TbHeight − log2SbH ][ i ][ 0 ] | |
| yS = DiagScanOrder[ log2TbWidth − log2SbW ][ log2TbHeight − log2SbH ][ i ][ 1 ] | |
| inferSbDcSigCoeffFlag = 0 | |
| if( i < lastSubBlock  &&  i > 0 ) { | |
|    **sb_coded_flag**[ xS ][ yS ] | ae(v) |
|    inferSbDcSigCoeffFlag = 1 | |
| } | |
| ... | |
| for( n = firstPosMode0; n >= 0 && remBinsPass1 >= 4; n−− ) { | |
| xC = ( xS << log2SbW ) + DiagScanOrder[ log2SbW ][ log2SbH ][ n ][ 0 ] | |
| yC = ( yS << log2SbH ) + DiagScanOrder[ log2SbW ][ log2SbH ][ n ][ 1 ] | |
| if( sb_coded_flag[ xS ][ yS ]  &&  ( n > 0  ||  !inferSbDcSigCoeffFlag )  &&<br>   ( xC != LastSignificantCoeffX  ||  yC != LastSignificantCoeffY ) ) { | |
|    **sig_coeff_flag**[ xC ][ yC ] | ae(v) |
|    ... | |
| } | |
| if( sig_coeff_flag[ xC ][ yC ] ) { | |
|    **abs_level_gtx_flag**[ n ][ 0 ] | ae(v) |
|    remBinsPass1−− | |
|    if( abs_level_gtx_flag[ n ][ 0 ] ) { | |
|       **par_level_flag**[ n ] | ae(v) |
|       remBinsPass1−− | |
|       **abs_level_gtx_flag**[ n ][ 1 ] | ae(v) |
|       remBinsPass1−− | |
|    } | |
|    ... | |
| } | |
| AbsLevelPass1[ xC ][ yC ] = sig_coeff_flag[ xC ][ yC ] + par_level_flag[ n ] +<br>   abs_level_gtx_flag[ n ][ 0 ] + 2 * abs_level_gtx_flag[ n ][ 1 ] | |
| if( sh_dep_quant_used_flag ) | |
|    QState = QStateTransTable[ QState ][ AbsLevelPass1[ xC ][ yC ] & 1 ] | |
| firstPosMode1 = n − 1 | |
| } | |
| for( n = firstPosMode0; n > firstPosMode1; n−− ) { | |
| xC = ( xS << log2SbW ) + DiagScanOrder[ log2SbW ][ log2SbH ][ n ][ 0 ] | |
| yC = ( yS << log2SbH ) + DiagScanOrder[ log2SbW ][ log2SbH ][ n ][ 1 ] | |
| if( abs_level_gtx_flag[ n ][ 1 ] ) | |
|    **abs_remainder**[ n ] | ae(v) |
| AbsLevel[ xC ][ yC ] = AbsLevelPass1[ xC ][ yC ] + 2 * abs_remainder[ n ] | |
| } | |
| for( n = firstPosMode1; n >= 0; n−− ) { | |
| xC = ( xS << log2SbW ) + DiagScanOrder[ log2SbW ][ log2SbH ][ n ][ 0 ] | |
| yC = ( yS << log2SbH ) + DiagScanOrder[ log2SbW ][ log2SbH ][ n ][ 1 ] | |
| if( sb_coded_flag[ xS ][ yS ] ) | |
|    **dec_abs_level**[ n ] | ae(v) |

# FIG. 7

| | |
|---|---|
| if( AbsLevel[ xC ][ yC ] > 0 ) { | |
|    if( lastSigScanPosSb = = −1 ) | |
|      lastSigScanPosSb = n | |
|    firstSigScanPosSb = n | |
|    } | |
|   if( sh_dep_quant_used_flag ) | |
|    QState = QStateTransTable[ QState ][ AbsLevel[ xC ][ yC ] & 1 ] | |
|  } | |
| signHiddenFlag = sh_sign_data_hiding_used_flag && | |
|   ( lastSigScanPosSb − firstSigScanPosSb > 3 ? 1 : 0 ) | |
| numPredSigns = 0 | |
| for( n = numSbCoeff − 1; n >= 0; n− − ) { | |
|   xC = ( xS << log2SbW ) + DiagScanOrder[ log2SbW ][ log2SbH ][ n ][ 0 ] | |
|   yC = ( yS << log2SbH ) + DiagScanOrder[ log2SbW ][ log2SbH ][ n ][ 1 ] | |
|   if( ( AbsLevel[ xC ][ yC ] > 0 ) && | |
|     ( !signHiddenFlag \|\| ( n != firstSigScanPosSb ) ) ) { | |
|    if( !isSignPredictedTU \|\| numPredSigns >= maxNumPredSigns ) { | |
|     **coeff_sign_flag**[ n ] | ae(v) |
|    } else { | |
|     **coeff_sign_resi_flag**[ n ] | ae(v) |
|     numPredSigns++ | |
|    } | |
|   } | |
|  } | |
| | |
| if( sh_dep_quant_used_flag ) { | |
|   QState = startQStateSb | |
|   for( n = numSbCoeff − 1; n >= 0; n− − ) { | |
|    xC = ( xS << log2SbW ) + DiagScanOrder[ log2SbW ][ log2SbH ][ n ][ 0 ] | |
|    yC = ( yS << log2SbH ) + DiagScanOrder[ log2SbW ][ log2SbH ][ n ][ 1 ] | |
|    if( AbsLevel[ xC ][ yC ] > 0 ) | |
|     TransCoeffLevel[ x0 ][ y0 ][ cIdx ][ xC ][ yC ] = | |
|       ( 2 * AbsLevel[ xC ][ yC ] − ( QState > 1 ? 1 : 0 ) ) * | |
|       ( 1 − 2 * coeff_sign_flag[ n ] ) | |
|    QState = QStateTransTable[ QState ][ AbsLevel[ xC ][ yC ] & 1 ] | |
|   } | |
|  } else { | |
|   sumAbsLevel = 0 | |
|   for( n = numSbCoeff − 1; n >= 0; n− − ) { | |
|    xC = ( xS << log2SbW ) + DiagScanOrder[ log2SbW ][ log2SbH ][ n ][ 0 ] | |
|    yC = ( yS << log2SbH ) + DiagScanOrder[ log2SbW ][ log2SbH ][ n ][ 1 ] | |
|    if( AbsLevel[ xC ][ yC ] > 0 ) { | |
|     TransCoeffLevel[ x0 ][ y0 ][ cIdx ][ xC ][ yC ] = | |
|       AbsLevel[ xC ][ yC ] * ( 1 − 2 * coeff_sign_flag[ n ] ) | |
|     if( signHiddenFlag ) { | |
|      sumAbsLevel += AbsLevel[ xC ][ yC ] | |
|      if( n = = firstSigScanPosSb && sumAbsLevel % 2 = = 1 ) | |
|       TransCoeffLevel[ x0 ][ y0 ][ cIdx ][ xC ][ yC ] = | |
|        −TransCoeffLevel[ x0 ][ y0 ][ cIdx ][ xC ][ yC ] | |
|     } | |
|    } | |
|   } | |
|  } | |
| } | |

# FIG. 8

(a)

| | |
|---|---|
| ... | |
| signHiddenFlag = sh_sign_data_hiding_used_flag &&<br>( lastSigScanPosSb − firstSigScanPosSb > 3 ? 1 : 0 ) | |
| if( !isSignPredictedSubTU ) | |
|   for( n = numSbCoeff − 1; n >= 0; n− − ) { | |
|     xC = (xS << log2SbW) + DiagScanOrder[log2SbW][log2SbH][n][0] | |
|     yC = (yS << log2SbH) + DiagScanOrder[log2SbW][log2SbH][n][1] | |
|     if( ( AbsLevel[ xC ][ yC ] > 0 ) &&<br>    ( !signHiddenFlag \|\| ( n != firstSigScanPosSb ) ) ) | |
|       **coeff_sign_flag**[ n ] | ae(v) |
|     } | |
|   } | |
|   if( sh_dep_quant_used_flag ) { | |
|   ... | |
|     if( signHiddenFlag ) { | |
|       signHiddenCoeff[ x0 ][ y0 ][ cIdx ][ xC ][ yC ] = 1 | |
|       sumAbsLevel += AbsLevel[ xC ][ yC ] | |
|   ... | |
| } | |

(b)

| | Descriptor |
|---|---|
| sign_prediction( x0, y0, tbWidth, tbHeight, cIdx ) { | |
|   spAreaWidth = Min( tbWidth, spRange ) | |
|   spAreaHeight = Min( tbHeight, spRange ) | |
|   numPredSigns = 0 | |
|   for( y=0; y<spAreaHeight; y++ ){ | |
|     for( x=0; x<spAreaWidth; x++ ){ | |
|       n = y * spAreaWidth + x | |
|       if(AbsLevel[x][y] > 0 && !signHiddenCoeff[x0][y0][cIdx][x][y]) { | |
|         if( !isSignPredictedTU \|\| numPredSigns >= maxNumPredSigns ) { | |
|           **coeff_sign_flag**[ n ] | ae(v) |
|         } else { | |
|           **coeff_sign_resi_flag**[ n ] | ae(v) |
|           numPredSigns++ | |
|         } | |
|       } | |
|     } | |
|   } | |
| } | |

# FIG. 9

START

minCost = MAXINT — SA1

DERIVE NEIGHBORING BOUNDARY PART — SA2

LOOP: ALL COMBINATIONS OF COEFFICIENT SIGNS

DERIVE BOUNDARY PART RESIDUAL — SA3

CALCULATE COST OF BOUNDARY PART RESIDUAL — SA4

cost < minCost — SA5

N

Y

UPDATE minCost = cost AND COEFFICIENT SIGN — SA6

DERIVE SIGN OF TRANSFORM COEFFICIENT, USING PREDICTION SIGN AND PREDICTION SIGN FLAG — SA7

END

FIG. 10

# FIG. 11

| R(0,-2) | R(1,-2) | R(2,-2) | R(3,-2) |
|---------|---------|---------|---------|
| R(0,-1) | R(1,-1) | R(2,-1) | R(3,-1) |

| R(-2,0) | R(-1,0) | R'(0,0) | R'(1,0) | R'(2,0) | R'(3,0) |
|---------|---------|---------|---------|---------|---------|
| R(-2,1) | R(-1,1) | R'(0,1) |         |         |         |
| R(-2,2) | R(-1,2) | R'(0,2) |         |         |         |
| R(-2,3) | R(-1,3) | R'(0,3) |         |         |         |

# FIG. 12

(a)

| seq_parameter_set_rbsp( ) { | Descriptor |
|---|---|
| ... | |
| **sps_lfnst_enabled_flag** | u(1) |
| ... | |
| if( !sps_lfnst_enabled_flag ) | |
| **sps_sign_prediction_enabled_flag** | u(1) |
| if( sps_sign_prediction_enabled_flag ) | |
| **sps_num_pred_signs** | u(3) |
| ... | |
| } | |

(b)

| seq_parameter_set_rbsp( ) { | Descriptor |
|---|---|
| ... | |
| **sps_sign_prediction_enabled_flag** | u(1) |
| if( sps_sign_prediction_enabled_flag ) | |
| **sps_num_pred_signs** | u(3) |
| ... | |
| if( !sps_sign_prediction_enabled_flag ) | |
| **sps_lfnst_enabled_flag** | u(1) |
| ... | |
| } | |

# FIG. 13

# FIG. 14

## INTERNATIONAL SEARCH REPORT

| International application No. |
|---|
| **PCT/JP2023/045668** |

| A. | CLASSIFICATION OF SUBJECT MATTER |
|---|---|

*H04N 19/103*(2014.01)i; *H04N 19/18*(2014.01)i; *H04N 19/50*(2014.01)i; *H04N 19/70*(2014.01)i
FI:   H04N19/103; H04N19/70; H04N19/18; H04N19/50

According to International Patent Classification (IPC) or to both national classification and IPC

| B. | FIELDS SEARCHED |
|---|---|

Minimum documentation searched (classification system followed by classification symbols)

H04N19/103; H04N19/18; H04N19/50; H04N19/70

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2018/110281 A1 (SHARP KABUSHIKI KAISHA) 21 June 2018 (2018-06-21) paragraphs [0049]-[0052], [0066]-[0090], [0102]-[0117], [0128]-[0131], [0136]-[0139], fig. 4-5, 7-10 | 1-2, 8 |
| A | | 3-7, 9 |
| A | WO 2018/173432 A1 (SHARP KABUSHIKI KAISHA) 27 September 2018 (2018-09-27) entire text | 1-9 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 February 2024** | **05 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2023/045668** |

| Patent document cited in search report | Publication date (day/month/year) | Patent family member(s) | Publication date (day/month/year) |
| --- | --- | --- | --- |
| WO 2018/110281 A1 | 21 June 2018 | (Family: none) | |
| WO 2018/173432 A1 | 27 September 2018 | (Family: none) | |

Form PCT/ISA/210 (patent family annex) (July 2022)